Europäisches Patentamt

European Patent Office

Office européen des brevets

(19)

(11) Publication number : **0 375 055 B1**

## (12) EUROPEAN PATENT SPECIFICATION

(45) Date of publication of patent specification :
22.03.95 Bulletin 95/12

(51) Int. Cl.⁶ : **G05D 1/02,** G06F 19/00, G06T 17/00

(21) Application number : 89203225.1

(22) Date of filing : 18.12.89

(54) Method and apparatus for controlling maneuvers of a vehicle, and vehicle comprising such apparatus.

(30) Priority : 23.12.88 US 290130

(43) Date of publication of application :
27.06.90 Bulletin 90/26

(45) Publication of the grant of the patent :
22.03.95 Bulletin 95/12

(84) Designated Contracting States :
DE FR GB IT NL SE

(56) References cited :
US-A- 4 530 056
IEEE JOURNAL OF ROBOTICS AND AUTO-
MATION vol. RA-3,no.2,April 1987,pages
101-108,New York,US;J.S.SINGH et al.:"Robot
Path Planning using Intersecting Convex
Shapes:Analysis and Stimulation"
LE NOUVEL AUTOMATISME
vol.28,no.36,March 1983,pages 52-60,Pari-
s,FRANCE;H.PLACE et al.:"Qu'en est-il des
robots mobiles?"

(56) References cited :
PROCEEDINGS OF THE 25TH IEEE CONFER-
ENCE DECISION & CONTROL 10th-12th De-
cember 1986,pages
1237-1249,Athens,GREECE;A.MEYS-
TEL:"Planning in a Hierarchical Nested Con-
troller for Autonomous Robots"

(73) Proprietor : Philips Electronics N.V.
Groenewoudseweg 1
NL-5621 BA Eindhoven (NL)

(72) Inventor : Trovato, Karen Irene
c/o INT. OCTROOIBUREAU B.V.
Prof. Holstlaan 6
NL-5656 AA Eindhoven (NL)
Inventor : Dorst, Leendert
c/o INT. OCTROOIBUREAU B.V.
Prof. Holstlaan 6
NL-5656 AA Eindhoven (NL)

(74) Representative : Strijland, Wilfred et al
INTERNATIONAAL OCTROOIBUREAU B.V.,
Prof. Holstlaan 6
NL-5656 AA Eindhoven (NL)

EP 0 375 055 B1

## Description

The invention relates to an apparatus for planning a path for a vehicle to follow through a given task space from a start point to a goal point, the path satisfying a given cost criterion, the vehicle being movable on at least one wheel and a rotatable or gliding support, said wheel being positioned substantially at one end of the vehicle and being steerable, said support being positioned substantially at the other end of the vehicle, in particular for parking a robotic vehicle or car. This is a particular example of planning an optimal path for an object to follow from a given start point to a nearest one of a set of goals, taking into account constraints and obstacles. Maneuvering typically takes place on a scale that does not permit to neglect the dimensions of the vehicle.

An outstanding problem in robotics is obstacle avoidance. Obstacles should be avoided along the way, and the movement as a whole should be as efficient as reasonably possible. The planning of the path should be as rapid as possible, for instance by giving a series of set points.

There are a number of existing robots. Typically they are controlled using a programming language, such as Val II, described in Unimation, Inc., "Programming Manual" User's Guide to Val II: Version 2.0 398AG1", December 1986. Val II can be used to control products such as Unimation's Puma Robots and adept Robots. Using Val II, a user can specify the movement of a robot, from a current point to a desired point, using the command MOVE POINT () on page 4-20 of the reference. Points are usually generated in joint coordinates. It is therefore sufficient for a path planning method to generate a series of set points to be inserted in the appropriate Val II command. The technology is in place for the robot to follow a path once the set points are generated.

Typical industrial robots use manually generated set points. Such manually generated set points are adequate for performing a simple repetitive task such as automated assembly in an environment which does not change from one task to the next. Manually generated set points are not practical and paths followed are often not efficient for dynamic situations, or for situations with large numbers of obstacles, or for obstacles with complex shapes. Therefore there is a need for a method to generate set points automatically.

One known method automatically generates a set of points along an optimal path. The set of points allows a robot to get from a start point to one of a set of goal points. One goal point is chosen over the others because it minimizes movement of the robot. This known method is disclosed in L. Dorst et al., "The Constrained Distance Transformation, A Pseudo-Euclidean, Recursive Implementation of the Lee-algorithm", Signal Processing III (I.T. Young et al. eds; Elsevier Science Publishers B.V., EURASIP 1986) ("L. Dorst et al."); and P.W. Verbeek et al., "Collision Avoidance and Path Finding through Constrained Distance Transformation in Robot State Space", Proc. Conf. Intelligent Autonomous Systems I, Dec. 8-11, 1986, Amsterdam pp. 627-634. The known method plans paths in the configuration space of the robot. Obstacles to robot movement are represented by forbidden states in configuration space. In this space, the series of set points is represented in so-called joint coordinates, this is a set of coordinates that can be used to drive the joints of the robot directly. No complicated coordinate transformations are needed. An advantage of the known method is the simplicity with which it can be expanded to greater numbers of degrees of freedom.

In the past, the path in configuration space was found in three steps:

1) A transformation is made of the obstacles and the goals of the robot from points in task space to states in configuration space. The configuration space is discretized.

2) A cost field is created, specifying the total cost needed to reach the closest goal state at each state in configuration space. The particular method used to produce the cost field is described in L. Dorst et al. The method is a repeated scanning of the complete configuration space, while performing a basic cost propagation operation at each state.

3) From the start state, steps are taken in the direction of the cost gradient of the cost field until the goal state is reached. The states passed on the way form the shortest path from start to goal, and can be used as the series of set points. Steps 1) and 2) are performed only once for a given robot and a given set of obstacles and goals. Using the same cost field, Step 3) can be performed for different start states.

The above method has a number of disadvantages. First, in step 2), the whole configuration space has to be scanned several times. Second, the kinds of cost metrics considered are restricted. In particular the cost of transitions between states in configuration space are considered to be the same for a given direction independent of the state at which cost is calculated. These restrictions limit practical applications. For instance, it is not possible to find a path for a robot arm with revolute joints that will result in minimal movement of an end-effector. Minimal time paths are only possible for a few robots which are of limited practical application. A third disadvantage is that following the gradient requires computation of the gradient at every point of the path.

In the prior art, a search technique known as A∗ was known, see e.g. N.J. Nilson, Principles of Artificial Intelligence, Chapter 2 (Tioga 1980).

After propagating cost waves, some aspect of the configuration space may change, for instance, if an obstacle is removed or a goal added. In such a case, it may be inefficient to repropagate cost waves through the entire configuration space, because only a small part of the configuration space may be affected.

Another problem which arises after a change in configuration space is that the precise location of the changes, particularly in obstacle location, may not be known.

An approach to this problem is set forth in V. Lumelsky, "Algorithmic and Complexity Issues of Robot Motion in an Uncertain Environment", Journal of Complexity 3, 146-182 (1987); and V. Lumelsky, "Dynamic Path Planning for a Planar Articulated Robot Arm Moving Amidst Unknown Obstacles", Automatica, Vol. 23., No. 5, pp. 551-570 (1987). This approach suffers from certain shortcomings. For instance, the method disclosed is only able to deal with two dimensions. The method also does not have a memory for previously encountered obstacles.

A number of research projects have considered the problem of electronic maps for vehicles.

SUMMARY OF THE INVENTION

It is therefore inter alia an object of the invention to control the maneuvers of a vehicle with a non-neglectable size.

It is a further object of the invention to control the maneuvers of a vehicle using techniques referred to herein as "budding" and "differential budding".

It is still a further object of the invention to establish an efficient precedence for searching a neighbourhood of a given state in configuration space.

These objects are achieved according to the invention in that the apparatus comprises means for storing an internal representation of a close environment of the vehicle, means for representing a pose of the vehicle in the given task space, which pose is measured in respect of a fixed point of the vehicle, and means for calculating a maneuver trajectory based on the internal representation. The close environment is a territory in which the maneuvering is performed: its size is within approximately the same order of magnitude as the size of the vehicle.

These objects are further achieved according to the invention in that the fixed point is positioned at a point of symmetry with respect to the support. The vehicle has a rotatable or gliding support, for example a wheel, a pair of wheels, one or more ski, a sleigh runner, etcetera. If this support is not steerable then choosing the fixed point at a point of symmetry with respect to the support leads to certain efficiencies of calculation: it is a pivot point of the vehicle. In case the support consists of a single wheel, ski or sleigh runner, this point of symmetry is situated at the center of the support. In case the support consists of two wheels, ski or sleigh runners, the point of symmetry is situated midway between the two. With three wheels, the point is situated at the center of the middle wheel, etcetera.

These objects are further achieved according to the invention by the use of cost metrics which are referred to herein as "space-variant metrics".

These objects are further achieved according to the invention by a process referred to herein as "following the direction arrows".

These objects are still further achieved according to the invention by using the space-variant metrics in a multi-dimensional configuration space.

The method of differential budding involves identifying a region in configuration space which is affected by a change of conditions in task space. Precisely selected states referred to as a perimeter and which define this region are then placed on a "sifting heap" from which they are budded.

In the case of an added obstacle, the perimeter includes the front edge of the obstacle as well as surrounding a group of states which are connected via direction arrows to the back edge of the added obstacle.

In the case of removed obstacles, the perimeter states are neighbours of the removed obstacle states.

In the case of added goals, the perimeter states are the added goals themselves.

In the case of partially sensed changes in conditions, the changes in conditions are detected while following a precalculated path. Most changes in conditions can then be dealt with as an added obstacle, a removed obstacle, an added goal, or a removed goal. In one embodiment of the invention, the object first encounters a portion of the change in conditions iteratively follows a newly calculated path unitl the change in conditions is taken into account.

Further objects and advantages of the invention will become apparent in the remainder of the application.

BRIEF DESCRIPTION OF THE DRAWING

These and other aspects of the invention are described herein with reference to the selected embodiments illustrated in the following Figures.

Figure 1a is a high level flowchart giving a conceptual view of the method of path planning.

Figure 1b is a more detailed flowchart of box 154 of Figure 1a.

Figure 2 shows a data structure used as a configuration space.

Figure 3 is a flowchart of an alternate embodiment of the method of path planning called "budding".

Figure 4 is a summary flowchart of the differential budding method.

Figures 5 and 6 are flowcharts giving more details of box 110 of Figure 4.

Figures 7 and 8 are flowcharts giving more details of box 120 of Figure 4.

Figures 9 and 10 are flowcharts giving more details of box 130 of Figure 4.

Figure 11 shows a flowchart for dealing with phantom changes in condtions.

Figure 12 is a schematic illustration of a vehicle in task space.

Figure 13 illustrates a transformation of a neighbourhood into task space.

Figures 14 a, b, c, and d illustrate obstacle transformation from task space to configuration space.

Figure 15 is a screen image of a sun workstation running a simulation.

Figure 16 is an illustration of the precedence of search of a given set of neighbours.

DETAILED DESCRIPTION OF THE PREFERRED EMBODIMENTS

A. Definition of Some Terms

A robot has degrees of freedom. The degrees of freedom are the independent parameters needed to specify its position in its task space. Some examples follow. A hinged door has 1 degree of freedom. In other words, any positiion can be characterized by one parameter, an opening angle. A robot which moves freely over a factory floor has two degrees of freedom, for instance the x- and y-position coordinates. An object in space can be considered to have six degrees of freedom. The 6 independent parameters that need to be specified are three position coordinates and three orientation angles. Therefore in order for a robot to be capable of manipulating an object into an arbitrary position and orientation in space, the robot must have at least six degrees of freedom. An example of a commercially available robot with six degrees of freedom is the Puma 562, manufactured by Unimation, Inc.

A rotational degree of freedom is a degree of freedom that corresponds to an angle about a rotation axis of a robot joint. A rotational degree of freedom is a periodic parameter with values running from 0° to 360°; i.e. 360° corresponds to the same configuration of the robot as does 0°. Translational degrees of freedom correspond to non-periodic parameters that can take on values over an infinite range. Usually, however, the ranges of both rotational and translational degrees of freedom are limited by the scope of the robot.

The "configuration space" of a robot is the space spanned by the parameters of the robot. The configuration space has one dimension for each degree of freedom of the robot. Herein, a point in configuration space will be called a "state". Each "state" in an n-dimensional configuration space is characterized by a set of n values of the n robot degrees of freedom. A robot in the position characterized by the set of values is in a certain configuration. The set of states in the configuration space corresponds to the set of all possible robot configurations.

For the purpose of computation, the configuration space is "discretized". This means that only a limited number of states are used for calculations.

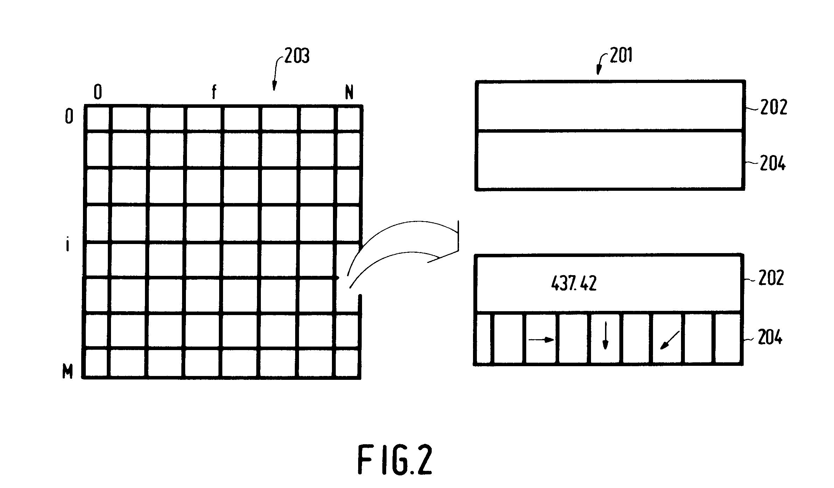

Figure 2 shows a data structure 203 which is used as the configuration space of a robot with two degrees of feedom. Data structure 203 is an MxN matrix of configuration states. The states are identified by their indices (i,j), where i represents a row number and j represents a column number. Each state (i,j) is itself a data structure as shown at 201 and has a cost_to_goal field 202 and a direction_arrows field 204. These fields are filled in by "budding" as described below. The cost_to_goal field 202 generally contains a number which represents the cost of transition to get from the present state to a nearest "goal state". "Goal states" represent potential end points of the path to be planned.

The cost of a transition in configuration space is a representation of a "criterion" or constraints in task space. A criterion is a cost according to which a user seeks to optimize. Examples of criteria that a user might choose are: amount of fuel, time, distance, wear and tear on robot parts, and danger.

The direction_arrows field 204 can contain zero or more arrows which indicate a direction of best transition in the configuration space from the present state to a neighbour state in the direction of the goal state resulting in a path of least total cost.

Arrows are selected from sets of permissible transitions between neighbouring states within the configuration space. The term "neighbour state" is used herein to mean a state which is removed from a given state by a single permissible transition. One set of arrows could be {up, down, right, left}, where, for instance, "up" would mean a transition to the state immediately above the present state. Another set of arrows could be {NORT, SOUTH, EAST, WEST, NE, NW, SE, SW}. Yet a third set of arrows could e {(0,1), (1,0), (0,-1), (-1,0), (1,1), (1,-1), (-1,1), (-1,-1), (1,2), (-1,2), (1,-2), (-1,-2), (2,1), (-2,1), (2,-1), (-2,-1)}. It is noted that the arrows "up", "NORTH", and "(-1,0)" are all representations of the same transition within the configuration space. In general one skilled in the art may devise a number of sets of legal transitions according to the requirements of particular applications. Once a set of legal transitions is devised any unambiguous symbolic representation of the set of permissible transitions can serve as the direction arrows. In the case of the directions (1,2), (-1,2), (1,-2), (-1,-2), (2,1), (-2,1), (2,-1) and (-2,-1), transition to a "neighbour" state in a two dimensional matrix 203 actually requires a "knight's move", as that term is known from the game of chess. For example (1,-2) represents the move in the neighbour direction "down one and right 2".

In the configuration space, a metric is defined. The "metric" specifies for each state in configuration space the cost of a transition to any neighbouring state. This metric may be specified by a function. For instance, a locally Euclidean metric can be defined as follows. At a state $(i,j)$, the cost of a transition in a neighbour removed from $(i,j)$ by direction arrow $(di,dj)$ is given by $SQRT(dixdi + djxdj)$. In other situations, it is more convenient to compute the metric in advance and store it. Obstacles can be represented in the metric by transitions of infinite cost. A transition between two arbitrary states must take the form of a series of transitions from neighbour to neighbour. The cost of any arbitrary path from a start state to a goal state is the sum of the costs of transitions from neighbour to neighbour along the path.

In budding, a standard data structure called a heap is used to maintain an ordering of states. This is only one of many possible schemes for ordering, but the heap is considered to be the most efficient schedule for implementations with a small number of parallel processors. The heap is a balanced binary tree of nodes each representing a configuration state. In the preferred embodiment, the nodes actually store the indices of respective configuration states. In the heap, each parent state a lower cost_to_goal than either of its two children states. Therefore, the state at the top of the heap is that with the least value of cost_to_goal. Heaps are well known data structures, whcih are maintained using well known methods. One description of heaps and heap maintenance may be found in Aho et al., The Design and Analysis of Computer Algorithms, (Addison-Wesley 1974) pp. 87-92. In an alternate embodiment, other ways of ordering states may be used during budding. For instance, a queue can be used. This means that nodes are not necessarily budded in order of lower cost.

B. Overview of Budding

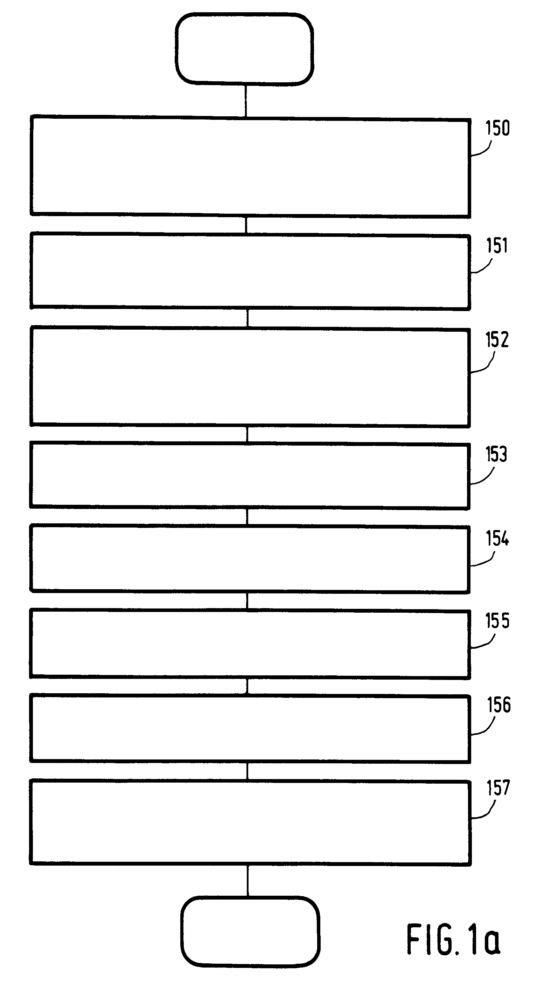

Figure 1a gives a general overview of steps used in generating a series of set points using the method of the invention.

In box 150 the configuration space is set up and permitted direction arrows are specified. One skilled in the art might devise a number of ways of doing this.

One option offered by the method is that of specifying aspects of the configuration space interactively. The number of states in a configuration space might be chosen to reflect how finely or coarsely a user wishes to plan a path. The set of direction arrows may be chosen to be more complete to get finer control of direction. The set of direction arrows may be chosen to be less complete if speed of path planning is more important than fine control of direction.

Other ways of specifying the configuration space and direction arrows are to code them into a program or hard wire them into circuitry. These options provide for less flexibility, but can result in increased processing efficiency.

In box 151, a "background metric" is induced by a criterion. A background metric is one which applies throughout a configuration space without taking into account local variations which relate to a particular problem. Another option offered by the method is to specify the transition costs interactively.

In box 152 obstacles and constraints are transformed from task space to configuration space. This transformation generates obstacle states and/or constraint states. in addition or alternatively the transformation can represent obstacles and constraints as part of the metric. Boxes 151 and 152 are represented as separate steps in Figure 1a, but in fact they can be combined.

In box 153, goals are transformed from points in task space to one or many goal states in configuration space.

In box 154 "budding" occurs. "Budding" is explained below. Budding results in filling the direction_arrows fields of the configuration space with direction arrows.

In box 155, a start state is identified. The start point in task space can be input by a user, or it can be sensed automatically, where applicable. This start point must then be transformed into a state in configuration space. If robot encoders are read, or the command WHERE in Val II is used, one obtains the parameters of the start state immediately, without any need for transformations. The WHERE command returns the joint encoder angles in degrees.

In box 156, the method follows the direction arrows set up in box 154 from the start point indicated in box 155 to the goal state. The path states passed through in box 156 are sent to a robot at 157. The path can be sent in the form of set points. Each set point can then be a parameter of a MOVE POINT () command in Val II. The set points can be transformations into task space of the path states passed through in box 156. In an appropriate application, the set points can be the path states themselves. As will be discussed below, in some applications the set points need not be used to direct a robot. They can also be used as instructions to human beings.

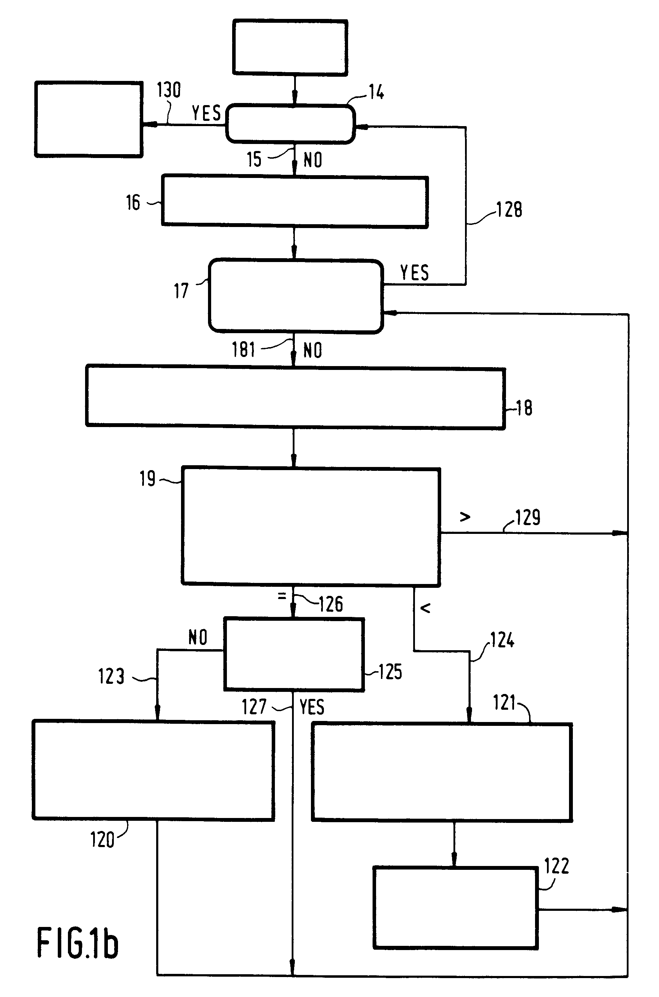

The method described in the flowchart of Figures 1a and 1b is applicable to a large number of different situations.

Although the path planning problem given is that of moving from a starting position to a goal position, the solution is actually found by propagating cost waves <u>starting at the goal</u> toward the start. The transition cost for moving from state "a" to a state "b" calculated during "budding" represents the cost that will be incurred while following the path states through b to a.

"Propagating cost waves", here, is treating layer after layer of unprocessed states. If a queue is used to schedule budding, unprocessed states are treated first in, first out. If a heap is used, then the lowest cost node will always be budded first.

Cost criteria can be selected according to the needs of a particular application, for instance: minimizing time, minimizing distance travelled, minimizing joint movement. The transition cost of movement is not symmetric. A transition from state A to state B may be more expensive than a transition from state B to state A.

The metric for transition costs between states of the configuration space is different from the cost criterion of movement in the task space, because cost waves are propagated from goal state to start state, in other words the transition costs are associated with transitions in configuration space.

When cost of movement varies depending on location in configuration space a "space-variant metric" is required.

Figure 1b expands box 154 of Figure 1a.

In box 150 of Figure 1a, uncosted values U are assigned to the cost_to_goal field of each configuration state, and all the direction_arrows fields are cleared.

In box 152 infinite values INF are set in the cost_to_goal field of configuration states which represent obstacles. In addition, the boundaries of the task space are obstacles.

Box 153 assigns zero 0 to the cost_to_goal fields of the configuration states which represent goals. There may be one or many goals. Also in box 153, the indices of the goals are added to a heap. Standard methods of heap maintenance are employed for addition and removal of states to/from the heap. As a result, the state with the lowest cost will always be the top state of the heap.

Box 14 of Figure 1b checks to see if the heap is empty. If the heap is empty, the algorithm takes the NO branch 15 to box 16. Box 16 takes the smallest cost item from the heap (top state), using a standard heap deletion operation.

Box 17 tests whether all the neighbouring states have been checked. Neighbour states are those states which are immediately adjacent to the top state. If the neighbouring states have not been checked, the method takes the NO branch 181 from box 17.

In box 18 the transition cost between the top state and its neighbouring states is calculated using the metric function. Transitions to obstacle states can be represented as "INF". Box 18 calculates each transition cost one at a time as part of the loop which includes boxes 17, 18, 19, 120, 121, 122 and 125.

Box 19 compares the sum of the transition cost and the contents of the cost_to_goal field of the top state with the contents of the cost_to_goal field of a current neighbouring state. If a state is in its initialized condition, the contents of the cost_to_goal field will be U, uncosted. One way to implement "U" is to assign to the cost_to_goal field a value which exceeds the largest possible value for the configuration space, other than INF. If the comparison in box 19 gives a comparison result of "<", the method takes branch 124 to box 121. Following branch 124 will be referred to herein as "improving" a state.

In box 121 the cost_to_goal field of the neighbour state is updated with the new (lower) cost_to_goal, i.e. the sum of the transition cost and the contents of the cost_to_goal field. In addition, box 121 adds an arrow pointing to the top state in the direction_arrows field of the neighbouring state.

In box 122, which follows box 121, the indices (i,j) of the neighbouring state are added to the heap.

The method now returns control to box 17. This return results in a loop. The method executes boxes 17, 18, 19, 121 and 122 for each of the neighbouring states, other than an obstacle. For an obstacle, the method takes branch 126 to box 125. Since the transistion cost is infinite, branch 127 is taken from box 125 to return control to box 17.

The above-described process of: exploring all of the neighbours of a first state; assigning appropriate costs and direction arrows to neighbours; and adding "improved" neigbouring states to the heap, is referred to herein as "budding" a state.

After budding the current top state, all neighbour states have been checked, so the "yes" branch 128 is taken from box 17. If the heap is not empty at box 14, branch 15 is taken.

In box 16, the next top state is retrieved. This is the smallest cost item which is on top of the heap.

If no impact can be made to any neighbour of a top state, no changes are made to the configuration space during that iteration. If the sum of the transition cost to a current neighbour state and the top state's cost_to_goal is greater than the neighbour's preexisting cost_to_goal, branch 124 is not taken. No improvement can be made. Branch 129 is taken instead, returning control to box 17. Taking branch 129 is referred to herein as "not impacting" another state.

It is possible that box 19 can reveal more than one equivalent path from a current neighbour state, which corresponds to branch 123. In box 120, an "alternative arrow" is added to a neighbour, but not to the heap, when an equivalent path is found. The direction_arrows field can contain more than one arrow as illustrated in 204 of Figure 2.

Once the heap is empty, branch 130 is taken and budding is completed.

Once the budding of all the states of the configuration space is finished, a path can be followed from any starting position to the goal by simply following the direction_arrows values. The cost in each configuration state gives the total cost required to reach the goal from that state.

Situations may occur where transformed obstacles may completely separate the start state from the goal state. In such situations, when budding has completed, there will be no arrows at the starting state. This indicates that there is no path to the goal from this starting state.

One skilled in the art might devise a number of ways of determining which regions in configuration space correspond to an obstacle in task space. One simple way of making this determination, is to simulate each state of the configuration space one by one in task space and test whether each state corresponds to hitting the obstacle. Standard solid-modelling algorithms may be used to determine whether the object for which a path is planned hits the obstacle in task space. One such set of algorithms is implemented by representing surfaces using the B-rep technique in the Silma package sold by SILMA, 211 Grant Road, Los Altos, CA 94022.

Sometimes a configuration space will be periodic. For instance, when the object for which a path is planned is a robot, the axes of the configuration space may be the joint angles of the robot. In this case the configuration space will be topologically equivalent to a torus, and paths may wrap around its edges.

States with equal cost_to_goal are located on what appear to be equal cost wave fronts flowing out from the goal. For this reason, in the art the term "propagating cost waves" has been used to describe the process of assigning direction arrows to states in configuration space.

An efficiency technique that can be used with budding is "early path detection". The early path detection feature makes use of the fact that as soon as the cost waves have been propagated just beyond the starting state, the optimal path can be reported, since no further budding changes will affect the region between the start and goal.

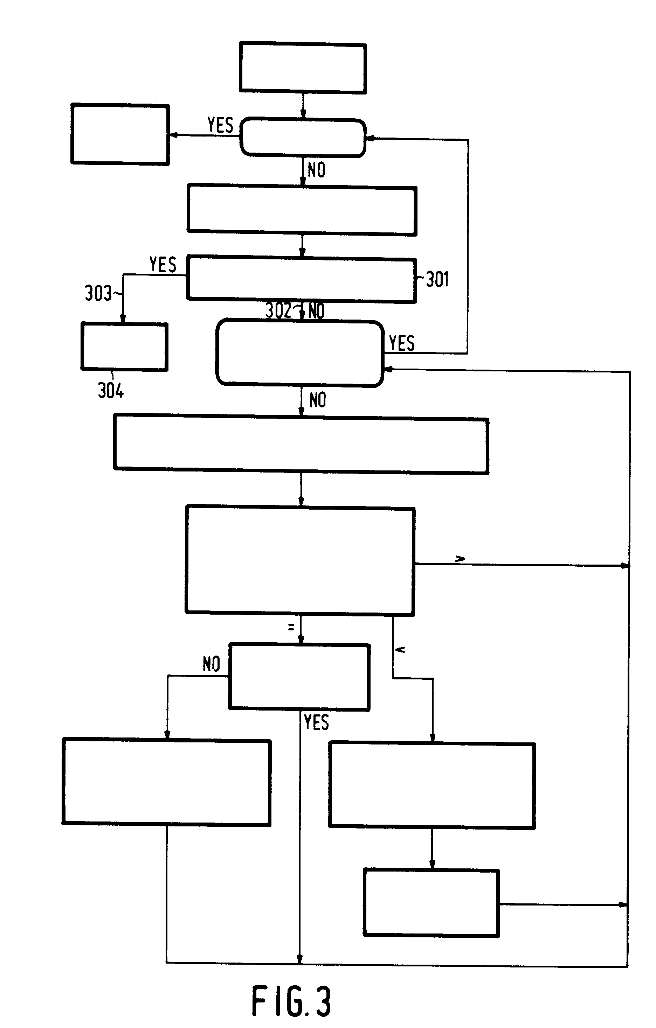

Figure 3 shows the additional steps necessary for early path detection. Figure 3 is the same as Figure 1b, except that several steps have been added. In box 301, the method tests whether the value of the cost_to_goal field of the state at the top of the heap is greater than the cost_to_goal field of the start state. If the result of the test of box 301 is negative, budding continues as usual, along branch 302. If the result of the test of box 301 is positive, the method follows branch 303 to box 304 where the path is reported. After the path is reported at box 304, normal budding continues. It is possible to stop after this early path detection if the entire cost field is not needed. This kind of early path detection is not possible if a queue structure is used during budding, instead of a heap because using a queue structure the shortest path cannot be determined until the entire configuration space is budded.

Another efficiency technique is to begin budding from both the goal and the start states. The path then is found when the expanding cost waves meet. Usually, a different metric must be used for budding the start state from that which is used for budding the goal states. This results from the fact that budding out from the start state would be in the actual direction of motion in the task space which is essentially calling the same metric function with the top and neigbhour states swapped. By contrast, budding from the goal states is in a direction opposite to motion in the task space.

## C. Overview of Differential Budding

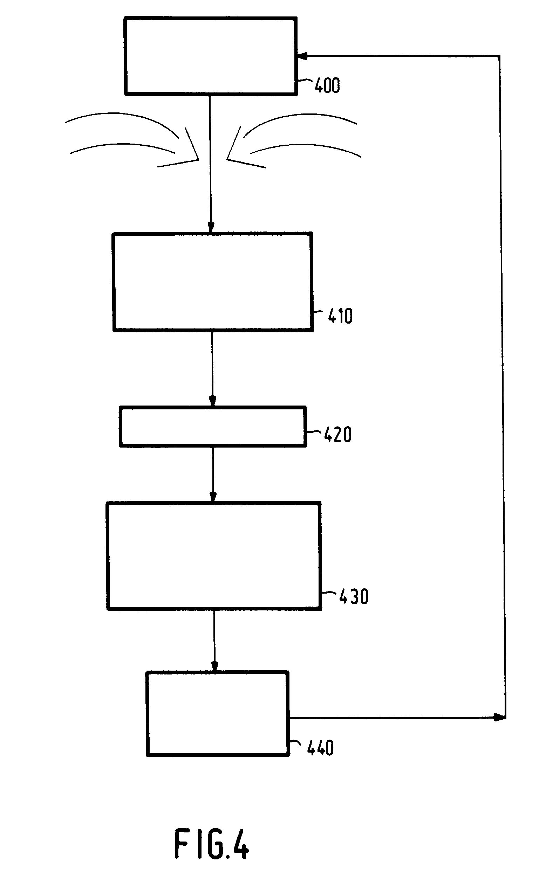

Figure 4 gives a general overview of steps used in "differential budding", a method for regenerating a configuration space with changes in obstacles and goals. The resulting configuration space provides information necessary to generate a series of set points to be followed for an optimal path.

In box 400, a configuration space filled with direction arrows and costs_to_goal is assumed. Information about changed goals and obstacle states is also assumed to be provided. These states are already transformed from task space to configuration space. It should be noted that the method will work if the configuration space is merely intitialized, with UNCOSTED in each cost_to_goal, and no direction arrows.

In box 410, information about newly added obstacle states and newly removed goal states is used to initialize the corresponding states in configuration space.

In box 420, all states "influenced" by the added obstacle and removed goal states are initialized to have UNCOSTED values and no direction arrows. "Influenced" neighbours are those that are on paths that point to or through these added obstacle or removed goal states. The "perimeter" of states around this region is obtained and added to the heap for later "budding".

In box 430, information about newly removed obstacle states and newly added goal states is used to initialize the corresponding states in configuration space. The heap is set up so that "budding" can take place.

In box 440, the states on the heap accumulated as a result of boxes 410, 420, and 430 are "budded" resulting in a stable (valid) configuration space. Given a starting state, an optimal path of set points can be read out by following the direction arrows in configuration space to the goal state.

Two special structures are used for efficiency: a sifting heap, and a sifting array. The "sifting heap" is a regular heap except that it keeps at most one copy of a tuple (state) in the heap even though many requests to add extra copies may be made. Whenever the word "heap" is used herein, a "sifting heap" is intended. The "sifting array" (used to store unique states of the perimeter) is similarly a regular array except that it keeps at most one copy of a tuple (state). Some of the arrays referred to herein are sifting and some are not. In both cases, sifting is achieved by maintaining flags in each state of the configuration space that report if a state is in the heap or in the perimiter array. Then all that is needed when adding or removing states from the heap or perimeter is to modify these flags correctly.

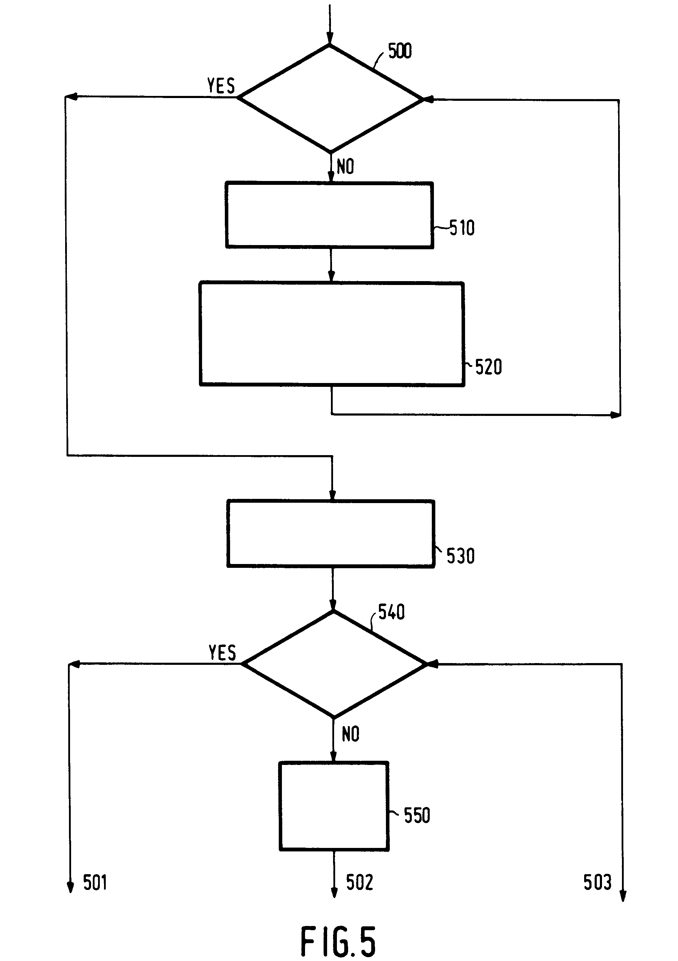

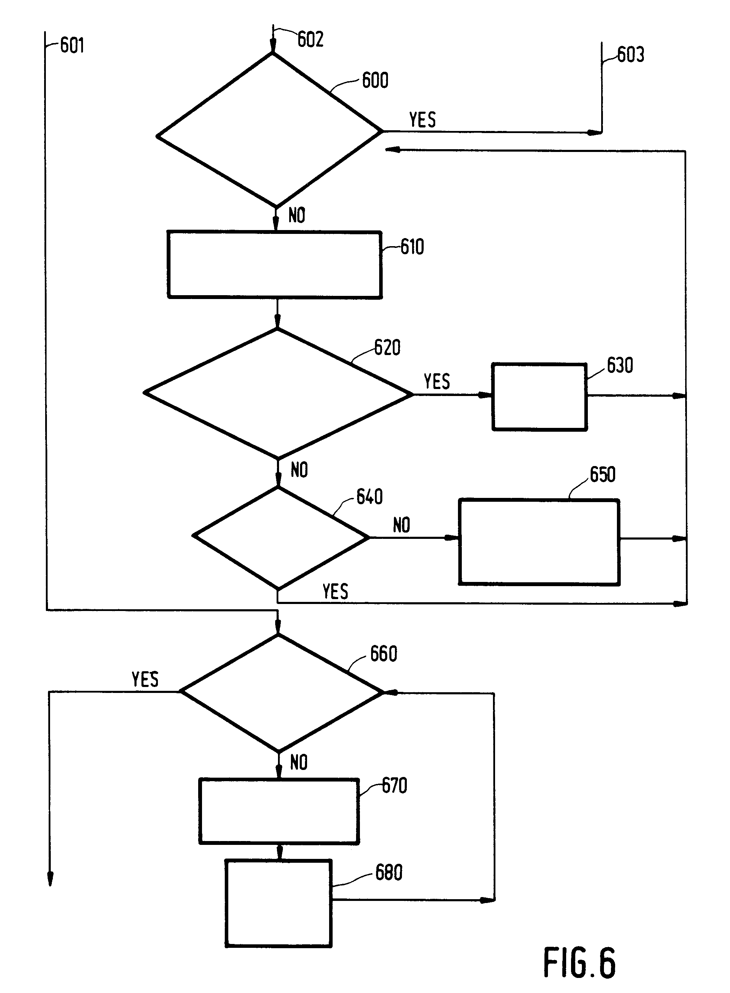

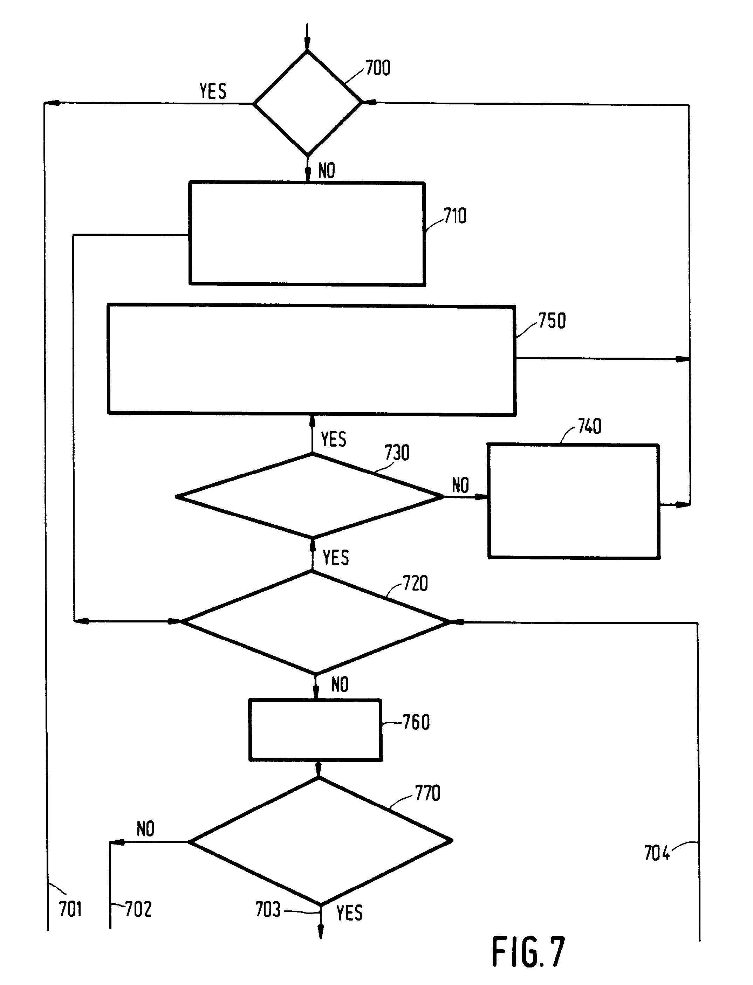

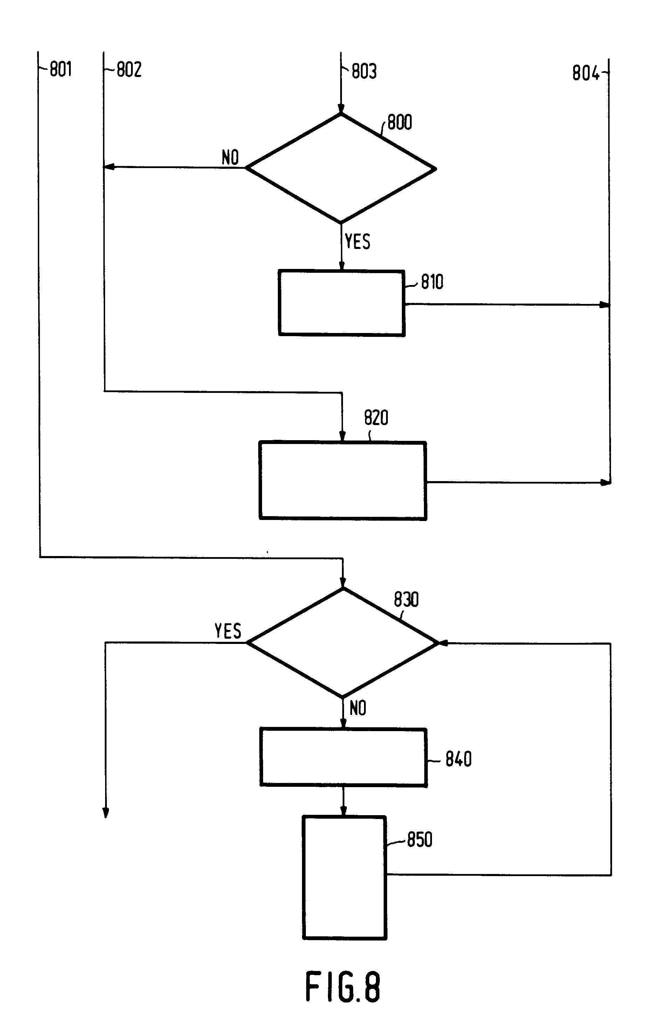

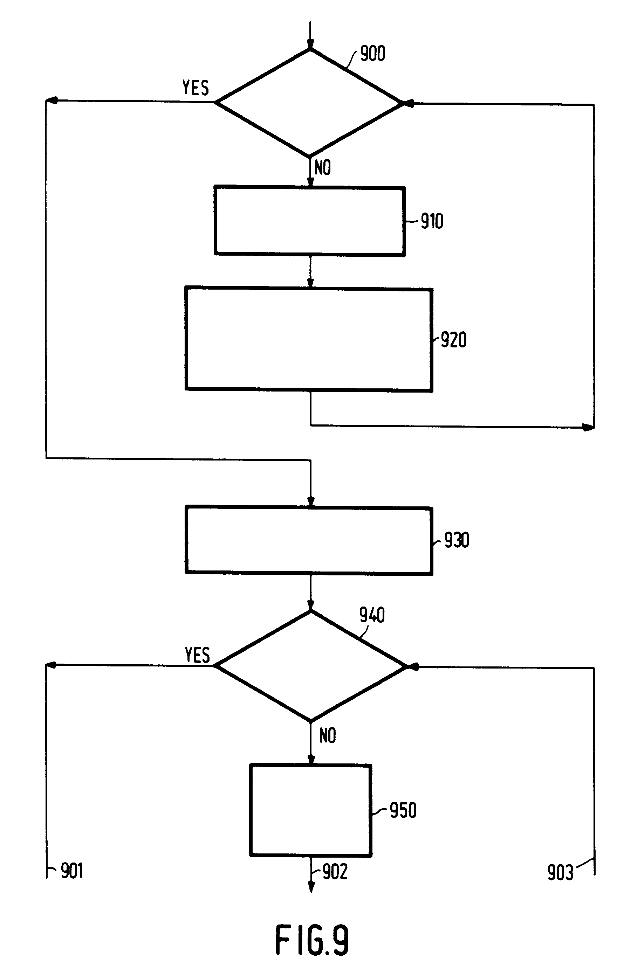

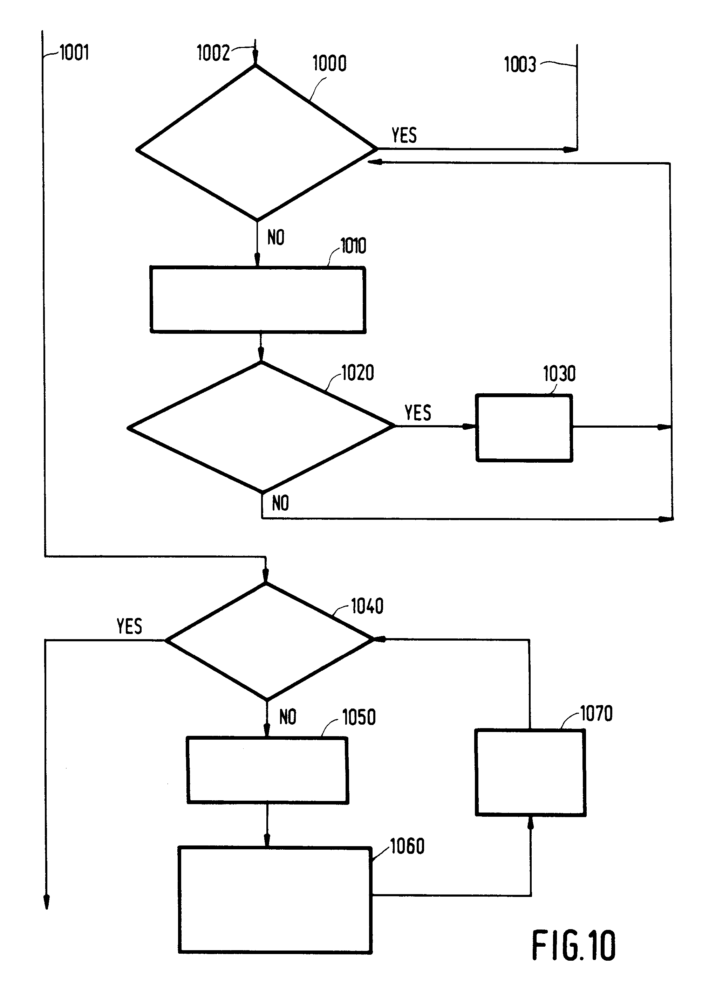

The method in box 410 is detailed by the flowchart of Figure 5 and Figure 6. The method of box 420 is detailed by the flowchart in Figure 7 and Figure 8. The method of box 430 is detailed by the flowchart of Figure 9 and Figure 10.

### i. Check added obstacles and removed goals

The "check added obstacles and removed goals" method of box 410 includes three main parts.

The first part is shown in boxes 500, 510, and 520. Box 500 tests whether the end of the "added obstacle" list has been reached. If the result of the test in box 500 is "Yes", control passes to box 530. If the result of the test in box 500 is "No", control passes to box 510. Box 510 gets the next obstacle state "S" from the added obstacle list. Box 520 then clears the direction_arrows field and sets the cost_to_goal field to INF in the state "S". After box 520, control is returned to box 500.

Boxes 500, 510, and 520 thus constitute a loop which initializes each "added obstacle" state ("S") in configuration space to have no direction arrows and an INF (INFINITE) cost_to_goal.

The second part of the "check added obstacles and removed goals" method of box 410 is shown in boxes 530, 540 and 550 of Figure 5, and boxes 600, 610, 620, 630, 640, and 650 of Figure 6. It should also be noted that line 501 of Figure 5 connects to line 601 of Figure 6; line 502 of Figure 5 connects to line 602 of Figure 6; and line 503 of Figure 5 connects to line 603 of Figure 6.

In this second part of box 410, the "front edge" of the obstacle and the "back edge" of the added obstacle are obtained. The "front edge" contains those neighbour states that are on the "goal side" of the added obstacle. These states are neigbhours of the obstacle region, have cost values other than INFINITY or UNCOSTED, and are not pointing toward any of the obstacle states. The "back edge" contains those neighbour states that are not on the front edge. These states have direction arrows that point into the added obstacle.

Box 540 signifies a test for the end of the "added obstacle" list. If the end has been reached, control passes via line 501/601 to box 660. If the end has not been reached, control passes to box 550, where an added obstacle "A" is retrieved.

Then at box 600, it is determined whether all of the neighbour states "N" of the obstacle state "A" have been considered. If all of the neighbour states "N" have been considered, control returns via line 603/503 to box 540. If a neighbour state "N" has not been considered, control passes to box 610, where that state "N" is retrieved.

Box 620 indicates a test of whether the state "N" contains a direction arrow that points to "A". If state "N" does not contain such a direction arrow, control passes to box 640. If state "N" does contain such a direction arrow, the state "N" is added to the heap at box 630. If the state "N" is added to the heap at box 630, "N" is considered to be part of the "back edge" of the added obstacle. After box 630, control returns to box 600.

In box 640, "N" is tested for whether its cost_to_goal field contains INF. If "N" does have a cost_to_goal of INF, control is returned to box 600. If "N" has a cost_to_goal other than INF, it is added to the "perimeter list" at box 650, and is considered part of the "front edge" of the obstacle.

The third part of the "check added obstacles and removed goals" method of box 410 is shown in boxes 660, 670 and 680 of Figure 3. These three boxes form a loop. In box 660, it is determined whether the end of the "removed goals" list has been reached. If the end has been reached, the "check added obstacles and removed goals" method is complete. If the end has not been reached, the next goal state "G" is retrieved at box 670. This goal state "G" is then added to the heap at box 680 and control is returned to box 660. Thus, in this loop, each of the removed goals states in the "removed goal list" is added to the heap.

ii. Clear influence

The "clear influence" method of box 420 includes two main parts. The first part determines the "perimeter of influence" due to the newly added obstacle and removed goal states, and the second part takes the perimeter and puts it into the heap.

The first part of the "clear influence" method of box 420 is shown in boxes 700, 710, 720, 730, 740, 750, 760 and 770 of Figure 7, and boxes 800, 810 and 820 in Figure 8. It should be noted that line 701 of Figure 7 connects to line 801 of Figure 8, line 702 of Figure 7 connects to line 802 of Figure 8, line 703 of Figure 7 connects to line 803 of Figure 8, and line 704 of Figure 7 connects to line 804 of Figure 8.

At the beginning of the "clear influence" method, the heap consists of neighbour states at the back edge of any added obstacles and any removed goals states. At box 700, the heap is tested to see if it is empty. If the heap is empty control passes via line 701/801 to box 830.

If the heap is not empty, then, at box 710, a minimum cost state "S" is retrieved from the heap and a variable, uncostflag, corresponding to "S" is set to "NO". At box 720, it is then determined whether all neighbours, "N", of "S" have been considered. If all the neighbours have been considered, control passes to box 760.

If all of the neighbours have not been considered, the variable uncostflag is tested at box 730. If uncostflag has a value "No" then, at box 740, "S" is added to the perimeter, if "S" has not already been added to the perimeter. If uncostflag has a value "Yes", then, at box 750, the cost_to_goal field of "S" is set to UNCOSTED; the direction_arrows field of "S" is cleared; and all neighbours from the "Bag" array are emptied into the heap which sifts them, i.e. it does not store any duplicate states.

At box 760 a next neighbour "N" is retrieved. At box 770 the cost_to_goal field of "N" is tested to see if it is either INF or UNCOSTED. If it is neither, control passes via line 702/802 to box 820. If it is either INF or uncosted, control passes via line 403/503 to box 500.

At box 800, "S" is checked to see if it has a direction arrow pointing to "N". If not, control passes to box 820. If so, the uncostflag associated with "S" is set to "YES".

In box 820 the neighbour "N" is temporarily stored in the Bag array. Control then returns via line 804/704 to box 720.

Thus, during the first part of the "clear influence" method of box 420, each state "S" in the heap, that points to any neighbour "N" that has a cost_to_goal that is either INFINITE or UNCOSTED is identified. Such a state "S" must therefore have been "connected" via direction arrows to the back of a new obstacle state or to a removed goal state. Any neighbour that is not INFINITE or UNCOSTED is a candidate for expanding the search and is temporarily stored in the "Bag". The "Bag" is a standard array containing states. After all neighbours of "S" are examined, if "S" is connected, then all neighbours of "S" that are in the "Bag" are added ("emptied") to the heap, which sifts them, and "S" is reinitialized to have cost_to_goal of UNCOSTED and no direction arrows. If "S" is not connected, "No" branch from box 730, then "S" must be a member of the "perimeter" and the neighbours that are in the "Bag" are NOT added to the heap.

The second part of the "clear influence" method of box 420 is shown in boxes 830, 840 and 850 of Figure 8. At box 830, the perimeter list, stored in a sifting array, is checked to see if it is empty. If so, the clear influence method ends. If not, a perimeter state "P" is retrieved 840 and added 850 to the heap, if not already in the heap. After box 850, control is returned to box 830. This second part of box 420 thus reads the states in the "perimeter list" and stores them in the heap.

Thus the perimeter list can be said to surround an influenced or "affected region" of the configuration space, and this terminology has been used herein. The term "influenced" is used herein particularly to refer to the "clear influence" step 420 and is distinguished from the term affected, which is used more broadly as explained below. However, this terminology is not meant to imply that the surrounded region contains the only states which may be changed as a result of differential budding. States on or outside the perimeter may have their cost_to_goal or direction_arrows values changed as a result of budding the heap in box 440 of Figure 4.

### iii. Check removed obstacles and added goals.

The "check removed obstacles and added goals" method of box 430 has three main parts.

The first part is shown in boxes 900, 910 and 920. At box 900, it is determined whether the end of the "removed obstacle" list has been reached. If the end has been reached, control passes to box 930. If the end has not been reached, a next obstacle state, "S", is retrieved from the list at box 910. In this state, "S", the direction_arrows field is cleared and the cost_to_goal field is set to UNCOSTED. This first part is, then, a loop which initializes each "removed obstacle" state in configuration space to have no direction arrows and an UNCOSTED cost_to_goal. These are appropriate values, since these now unoccupied (removed) obstacle states have no presumed costs or arrows. These removed obstacle states can be said to be the region affected by the obstacle removal, and this terminology is used herein. However, it should be noted that states outside this "affected region" may still have their cost_to_goal and direction_arrows values changed as a result of budding in box 440. The states surrounding the removed obstacle can be said to be the perimeter, but they require a less sophisticated treatment than the perimeter of the removed goals and added obstacles.

The second part of box 430 is shown in boxes 930, 940 and 950 of Figure 9 and boxes 1000, 1010, 1020, and 1030 of Figure 10. Line 901 of Figure 9 connects to line 1001 of Figure 10, line 902 of Figure 9 connects to line 1002 of Figure 10, and line 903 of Figure 9 connects to line 1003 of Figure 10.

This second part of box 430 starts at the top of the removed obstacle list, at 930. A test is performed at 940, as in box 900, to determine whether the end of the "removed obstacle" list has been reached. If the end has been reached, control passes via line 901/1001 to box 1040. If the end has not been reached, a next obstacle state "R" is retrieved at 950. Then, in box 1000, it is determined whether all neighbours of "R" have been considered. If so, control is passed via line 1003/903 to box 940. If not, a next neighbour state "N" of "R" is retrieved at 1010. If "N" has a cost_to_goal field which has a value of UNCOSTED or INF, then control is returned to box 1000. If "N" has a cost_to_goal field which is not UNCOSTED and not INF, then "N" is added to the heap at 1030.

Thus, in this second part of box 430, all neighbours of a removed obstacle state that have a cost_to_goal other than "INFINITY" or "UNCOSTED" are added to the heap, which sifts them. These states together form an edge that is adjacent to the removed obstacle. These neighbouring states will help (via the "budding" mechanism of box 440) to fill in the vacated area where the "removed obstacle" states reside.

The third part of box 430 is shown in boxes 1040, 1050, 1060 and 1070 of Figure 10. At box 1040, a test is performed to determine if the end of the "added goals" list has been reached. If the end has been reached, the "check removed obstacles and added goals" method terminates. If the end has not been reached, a next goal state "G" is retrieved at 1050. At 1060, for the goal "G", the direction_arrows field is cleared and the cost_to_goal field is set to zero. Then, at 1070, the goal "G" is added to the heap and control is returned to box 1040.

Thus, this third part of box 430 is a loop which takes each newly added goal state from the "added goals" list, clears the direction arrows, sets the cost_to_goal to zero, and adds each goal state to the heap. Thus the added goal states are both the "affected region" and the perimeter as that terminology is used herein. However, it should be noted that states outside this "affected region" may still have their cost_to_goal and direction_arrows values changed as a result of budding in box 440.

In summary, then, the "affected region" as that term is used herein means states that have been cleared as part of the clear influence step 420, and states corresponding to removed obstacles and added goal states which are "influenced" are the ones cleared during the clear influence step 420.

Differential budding can also handle the situation where some new information is discovered while an object is already moving on a prescribed path. This arises when the object does not have a vision sensor, or has a faulty one, but does have a proximity or tactile sensor of some kind, or when discretization of the configuration space leads to some errors in motion which must be corrected along the way. This can also arise where stored information becomes out of date. In many cases an object may be able to learn about an environment simply by moving around, acquiring information about new obstacles or goals or removed obstacles or goals as it encounters them, and incorporating this knowledge into its configuration space. The object can also adapt to a changing environment even if the vision sensors are not perfect. In such cases new information can be regarded as added or removed obstacles or goals. New obstacles can be detected by encountering different parts of the obstacle while following iteratively developed new paths.

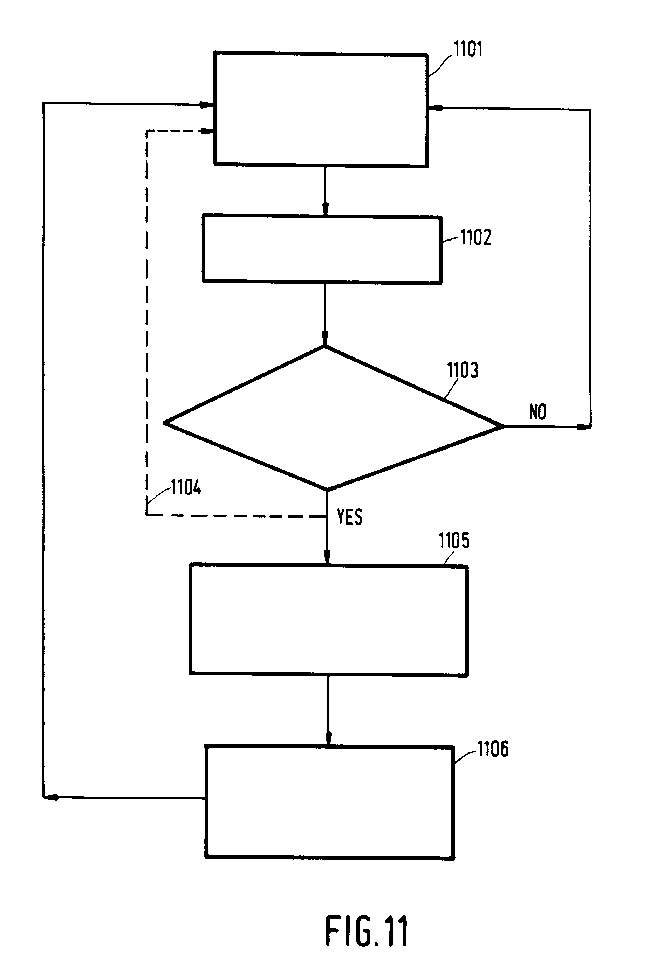

Figure 11 is a flow chart which summarizes the iterative approach to dealing with unsensed or partially sensed changes in conditions.

In box 1101 the method determines a next state in a precalculated path, by following direction_arrow values from a current state.

In box 1102 the method sends a set point to a motion controller for the robot, based on the next state.

At box 1103 a test is performed to determine whether a sensor associated with the motion to the next state has detected new information. If no new information is detected, control returns to box 1101.

If new information is detected there are two options. If the new information is not an absolute obstacle to movement, control may optionally return via the dotted line 1104 to box 1101. The dotted line 1104 represents a situation in which movement is chosen over calculation of a new optimum path. The dotted line 1104 is chosen, in other words, when movement is more important than strict optimality.

While the dotted line 1104 is taken, a processor could be incorporating new information into a configuration space while motion continues. Such parallel processing could be useful when the new information does not immediately affect the motion on the precalculated path. For instance, if the method is applied to control of emergency vehicles, an emergency vehicle might report a traffic blockage in a lane of opposing traffic. Such a report need not affect the progress of the emergency vehicle which reports the blockage. In this case of the emergency vehicle, the vision of the driver is the proximity sensor.

If the dotted line 1104 is not taken, and new information is sensed, control passes to box 1105. In box 1105, the new information is incorporated into configuration space. At 1106, differential budding occurs, for instance using boxes 410-440 of Figure 4.

After 1106, control returns to box 1101.

## D. Precedence of Search of Neighbours

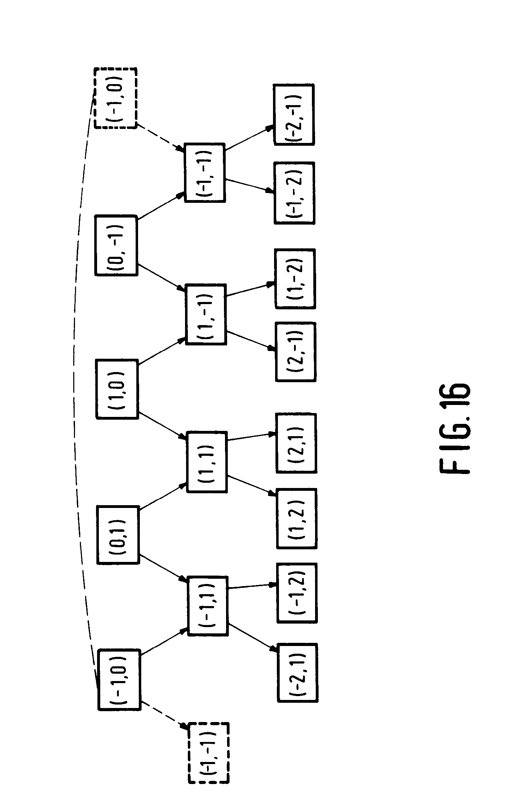

The search of the neighbours in box 17 must occur in particular order as soon as there are more neighbours than the set {(1,0), (0,1), (-1,0), (0,-1)}. The search of box 17 should never allow searching a neighbour which is beyond a neighbour blocked by an obstacle. For instance, given the set of neighbours {(1,0), (0,1), (-1,0), (0,-1), (1,1), (1,-1), (-1,1), (-1,-1), (2,1), (1,2), (2, -1), (1,-2), (-2,1), (-1,2), (-2,-1), (-1,-2)}, the neighbour (1,1) should never be searched unless both (0,1) and (1,0) have been searched and are free of obstacles. If either (0,1) or (1,0) is blocked, it should be assumed that, (1,1), which is beyond both of them, cannot be reached safely. Similarly, (2,1) should not be searched unless (1,1) has been searched and is free of obstacles. Neighbour (0,1) does not have to be searched a second time in order to determine that it is safe to search neighbour (2,1), because (1,1) would not have been searched unless (0,1) was clear. Precedence of search is necessary to find safe paths through configuration space, but it also results in a benefit of making the search of box 17 more efficient, because not all neighbours will always be searched. Figure 16 shows the precedence of search amongst the neighbours in the set {(1,0), (0,1), (-1,0), (0,-1), (1,1), (1,-1), (-1,1), (-1,-1), (2,1), (1,2), (2,-1), (1,-2), (-2,1), (-1,2), (-2,-1), (-1,-2)}. The dotted lines in Figure 16 represent the fact that the picture wraps around at the ends, with (-1,0) able to appear at either end.

While this example gave a particular precedence for a particular application, those of ordinary skill in the art will be able to design other precedences which make sense for other applications.

In accordance with the chosen precedence, a representation of the neighbour states can be stored in a neighbour memory, using a tree structure. If a blocked neighbour state is found during the search, then subtrees of this blocked neighbour state need not be searched any more. These subtrees can be skipped. Thus, using standard methods of tree maintenance, higher efficiency is obtained.

## E. Application of Budding and Differential Budding to Maneuvering a Vehicle

One possible application of budding and differential budding is maneuvering a robotic vehicle. The word "maneuver" is used herein to mean small movements, i.e. movements which have a size which is within approximately the same order of magnitude as the size of the robotic vehicle, as opposed to large movements, such as would be planned with an electronic map. A robotic vehicle may be maneuvered into, for example, a tight parking space, a three point turn, or an ordinary turn. Such maneuvers are often difficult for the operator of a robotic vehicle to plan because of imperfect knowledge of the size and maneuverability of the vehicle.

In what follows, an example of the application of budding and differential budding to maneuvering a robotic vehicle is given. The example is of an ordinary car with front wheel steering.

The car can be regarded as a robot with three degrees of freedom. Three parameters $(x,y,\phi)$ will be used herein as axes of a configuration space for the car, where x and y define a location of the car in Cartesian coordinates and $\phi$ represents its angle.

The "Cartesian point location" of the car $(x,y)$ is taken to be at a point midway between its non-steering wheels. In most cars, this point is at the rear differential of the car, because in most cars steering is effected with the front wheels. This particular point is chosen because it leads to certain efficiencies of calculation, which will be described below. However, any point consistently related to the position of the car may be chosen.

In addition to having a point location, the car is assumed to be contained within a rectangle having a width and length. The rectangle is also assumed to have an angle relative to a fixed reference angle.

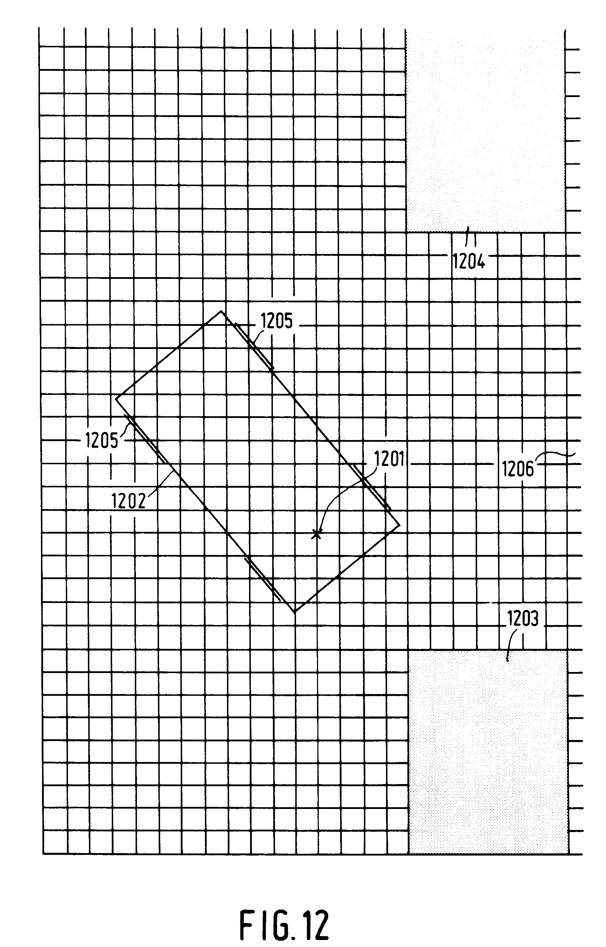

Figure 12 illustrates a schematic task space of a car 1202, with a cross 1201 at its Cartesian point location. Two obstacles 1203, 1204, which could be parked cars, are shown.

The car 1202 is considered to be located at an (x,y) position at the Cartesian point location 1201 and at an angle $\phi$, here pictured at about 235°. In this example, the 235° is measured from a fixed reference angle 0° which is parallel to the curb 1206 and has a direction from box 1204 to box 1203. The units chosen for this example were arbitrary, with the care 1202 being 3 units long. The discretization, illustrated by the grid is chosen so that the x and y axes in configuration space each have four states per distance unit. Thus the car is 12 states long. The discretization was also chosen so that the angle $\phi$ could assume 64 different values. In other words, the periodic axis $\phi$ in configuration space has sixty-four states along it, with each state representing an increment of 5.625°. Those of ordinary skill in the art will appreciate that other units and other levels of discretization can be chosen. In particular, finer discretization will give more accurate calculations of movement at the expense of longer calculation time, while coarser discretization will give less accurate calculations with a shorter calculation time.

In order to simplify the example, the front wheels 1205 are assumed to be parallel, and to have three possible postions: 45° to the left, straight, and 45° to the right. The wheel positions are used to determine how the car 1202 moves, but are not a parameter of the configuration space in this embodiment. In real cars, the wheels may not always be precisely parallel. However, given the level of discretization chosen, such seconday effects can be ignored. In real cars, the front wheels can assume a greater variety of positions than are allowed in the present example. The techniques of the present example can be readily adjusted to take into account secondary effects and increased numbers of wheel angels.

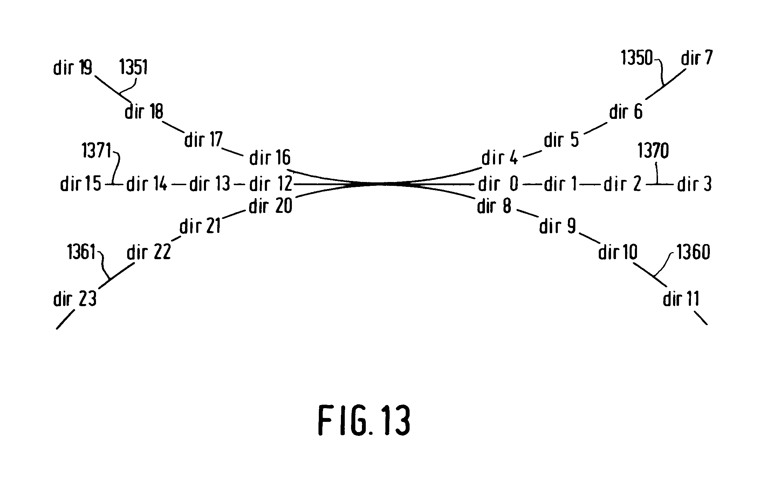

Figure 13 schematically illustrates the shape of transform of the neighbourhood of any given car pose as that transform would look in task space. Assuming the front of the car is pointed towards dir 3. Fiber 1351 illustrates the forward and 1350 the backward path of the Cartesian point location of the car when the front wheels are turned 45° to the left. Fiber 1361 illustrates the forward and 1360 the backward path of the Cartesian point location of the car with the front wheels turned 45° to the right. Fiber 1371 illustrates the forward and 1370 the backward path of the Cartesian point location of the car with the front wheels straight.

When a real car drives first forward and then backward, with the steering wheel turned at a given angle, the real car does not exactly retrace its path. However, because of the discretization of the configuration space, the paths 1350, 1351, 1360, 1361, 1371, and 1370 adequately represent the possible paths of the car given the assumed front wheel angels. If the discretization gives rise to rounding errors, with the car ending tip in a pose other than that intended, the car can still follow the direction_arrows from its new pose to the goal.

If it is assumed that the maximum angle which the front wheels can make is 45°, the fibers 1350/1351 and 1360/1361 define outer boundaries of all of the possible paths which the Cartesian point location of the car can take from the given pose. The shape of Figure 13 will be referred to herein as a "bow-tie". Thus the set of neighbours of a given state in configuration space, will correspond to a bow-tie around the pose corresponding to that state in task space.

The bow-tie formation illustrates the usefulness of choosing the Cartesian point location of the car in task space to be midway between the non-steering wheels. This Cartesian point location is a pivot point of the car. In other words, when this Cartesian point location is chosen, fibers 1350 and 1360 meet at a single tangent point, rather than having two points of intersection.

Other kinds of vehicles may have more or different pivot points.

Figure 13 schematically illustrates the location of 24 neighbour points surrounding an arbitrary point in task space. It is to be noted that since budding generally occurs outward from the goal, the lines from the current pose are opposite to the direction_arrows which would be assigned during budding. Thus neighbour dir 7, which is forward of the current position and to the left, corresponds to a direction_arrows value which corresponds to moving the car backwards with the front wheels turned left. Neighbour dir 19, which is in back of the current position and to the left, corresponds to a direction_arrows value which corresponds to moving the car forwards with the front wheels turned all the way to the left.

The neighbour points of Figure 13 are adapted to the particular discretization which was chosen for this example. More neighbours would allow for more precise movement. Less neighbouts would allow for less precise movement. If the wheels of the car are allowed to assume more angles, i.e. if they are represented with a finer degree of discretization, the bow-tie will have more fibers with neighbours on each fiber. Alternatively, enough neighbours can be added to completely fill the space between the outerboundary fibers 1350/1351 and 1360/1361. These additional neighbours may or may not be considered to be located on fibers, although they correspond to some calculable and unique wheel angle. These additional neighbours will minimize transition cost to the current state. In such a case, the wheel angel could be considered to be continuous rather than discretized.

The above discussion of neighbourhoods can be generalized to other examples of path planning. In general, the number of neighbours to a current state can vary depending on the state. In other words, the neighbourhood is "space-variant". In addition, the neighbourhood around the state can take on any shape depending on the application.

The placement of these 24 neighbour poses with respect to the current pose are listed in TABLE 1. As shown in this table, the neigbhour points are a function of the angle $\phi$ of the car. The angle $\phi$ is called "carangle" in the table, and it assumes values 0-64. The neighbour poses are called dir 0, dir 1, ..., dir 23, which correspond to the neigbhour points in Figure 13. Next to the name of each of the neighbour points in TABLE I are four numbers. The first number represents a distance travelled by the Cartesian point location of the car from a current point to the neighbour point. The next three points represent the pose differential value (dx,dy,d$\phi$), with dx, dy, and d$\phi$ represented as respective numbers of states.

Thus, for example, under carangle 0 in TABLE I, dir 0 represents a Cartesian point location movement of 0.250 units, a transition of one state in the x direction, and a transition of zero states in the y and $\phi$ directions. Similarly, under carangle 0, we see that dir 23 represents a Cartesian point location movement of 1.017, a transition of -4 states in the x direction, a transition of 0 states in the y direction, and a transition of 3 states in the $\phi$ direction.

Within a given carangle, two neighbour points may not be distinguishable. For instance, under carangle 0, dir 4 represents a Cartesian point location movement of 0.250, a transition of one state in the x direction and transitions of zero states in the y and $\phi$ directions. Thus under carangle 0, dir 4 is indistinguishable from dir 0. This is an artifact resulting from the level of discretization of the configuration space. The transition with the higher cost will never be chosen in box 19 of Figure 1a. In in alternative embodiment, this redundancy of the neighbourhood can be eliminated, by removing higher cost redundant neighbours from the search.

Thus, in general, Table I defines a set of neighbourhoods which vary according to the state, or a "space variant neighbourhood".

The cost function chosen to be minimized in this embodiment is the distance travelled by the Cartesian point location of the car. Because of this choice of cost function, the distance values in TABLE I also indicate the transition costs from the states corresponding to the indicated neighbour poses to the state corresponding to the indiated current pose. TABLE I thus also defines a space variant metric as well as a space variant neighbourhood. The term "metric" is applied to the metric induced herein to mean that transition costs are $\geq 0$, regardless of whether there is symmetry of transition costs or whether the triangular inequality holds for transition costs.

One skilled in the art might choose other cost functions to minimize, for instance the number of turns of the steering wheel, or the amount of time a particular path takes to follow.

If different parameters were chosen for the configuration space the set of neighbours would be chosen differently. For instance, the bow-tie of Figure 13 is symmetrical because it is assumed that the car has perfect response. If the car does not have perfect response, velocity may become a fourth parameter of the configuration space. At higher velocities, it is not reasonable to consider instantaneously reversing the direction of the car. Therefore, some of the neighbourhoods will have a transform looking like a narrowed version of only one bow of the bow-tie. For instance, if the car is moving 30 m.p.h. forward, dir 0 through dir 11, which correspond to reverse motion of the car, should be eliminated from the neighbourhood. Similarly, the maximum wheel angles allowed at 30 m.p.h. would be smaller than those allowed at rest, therefore dir 16 through dir 19 would correspond to a maximum wheel angle of less than 45°. In this example, extra neighbours, beyond dir 15, dir 19, and dir 20 should be added to correspond to extra possibilities for motion for the car.

In budding, the neighbours in the bow-tie neighbourhood must be searched according to a precedence, as described in section D, above, in which no neighbour is searched if it is beyond a neighbour which is blocked by an obstacle. In the case of Figure 12, the precedence can involve searching all of the neighbours on a fiber of the bow-tie, from the center out, until an obstacle is reached or until the end of the fiber, and then searching another fiber. Other precedences can be chosen. For instance, if redundant neighbours are removed, the removed redundant neighbour should be considered blocked or non-blocked for precedence of search depending on whether a retained redundant state is blocked. In other words, if dir 4 is removed from Table I for the search for carangle 0, then the search of block 17 of Figure 1b will search dir 5 if and only if dir 0 is non-blocked.

The transformation of obstacles into configuration space will now be described.

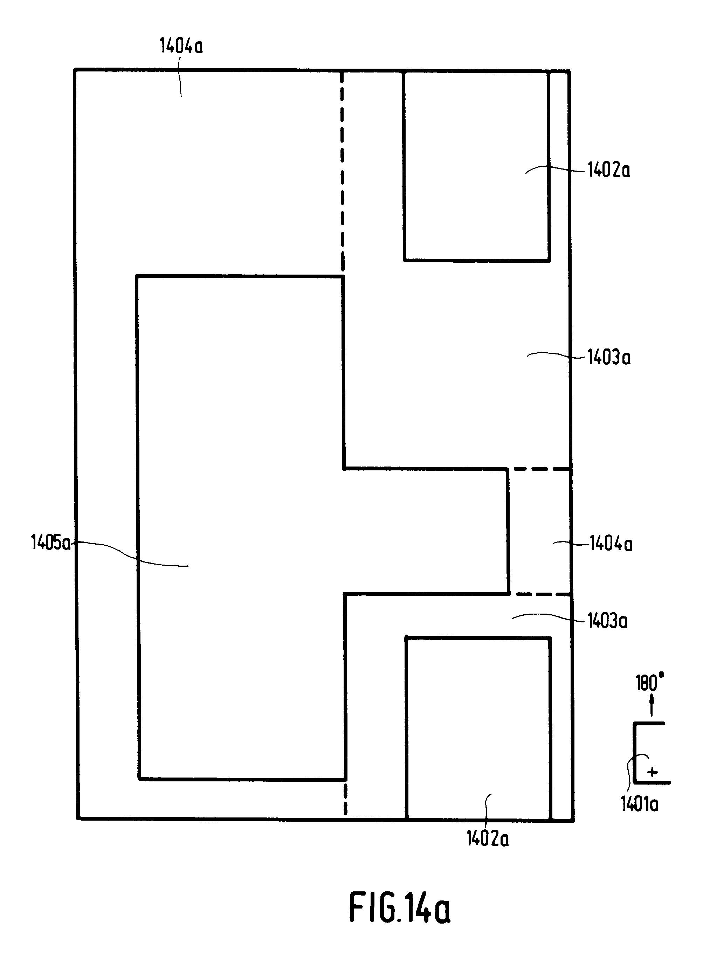

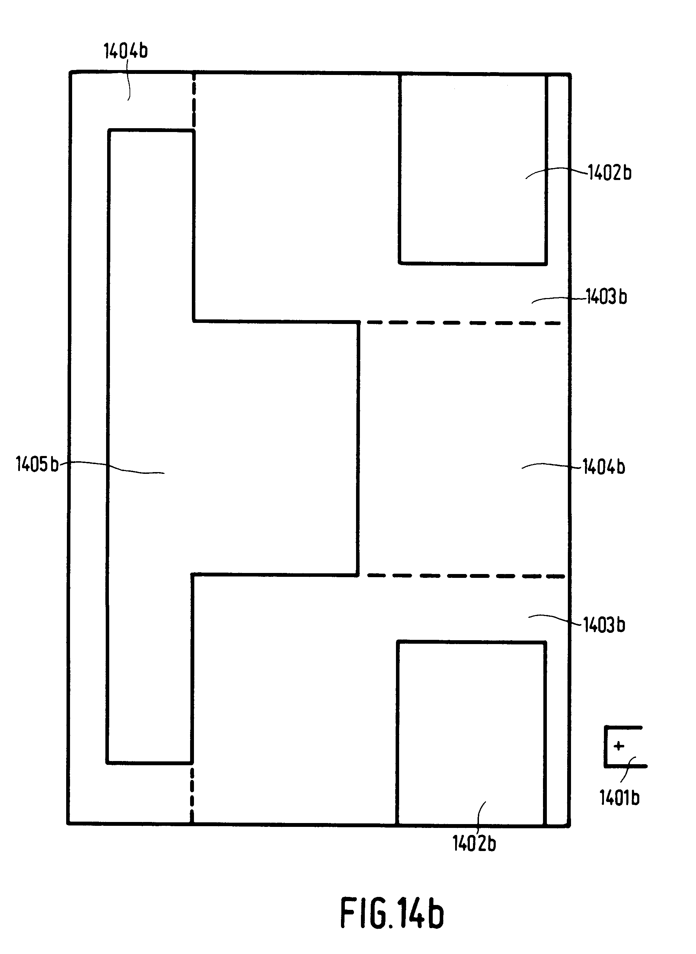

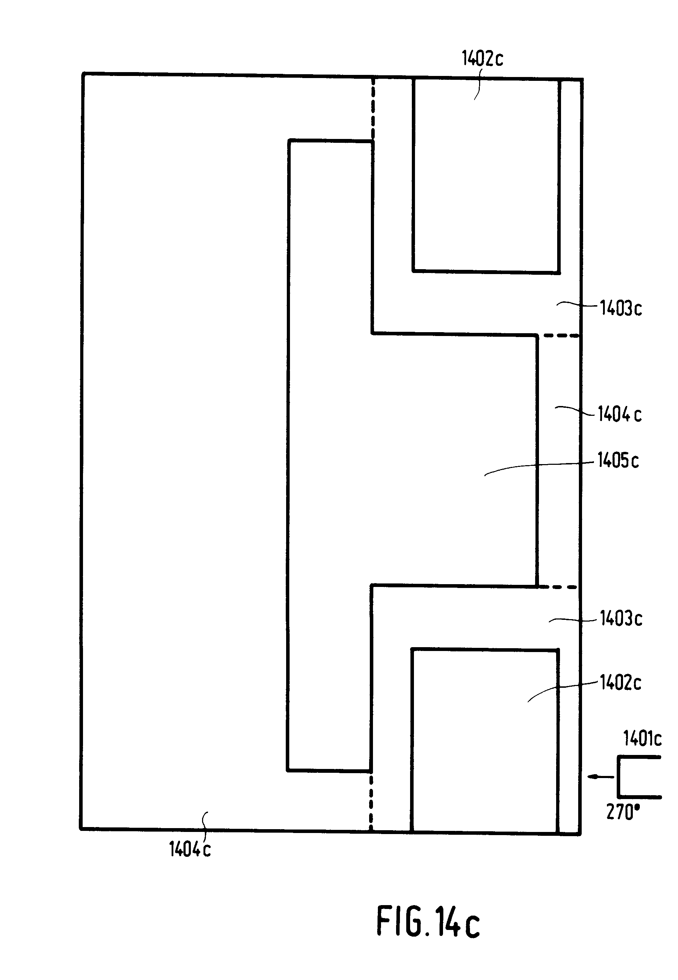

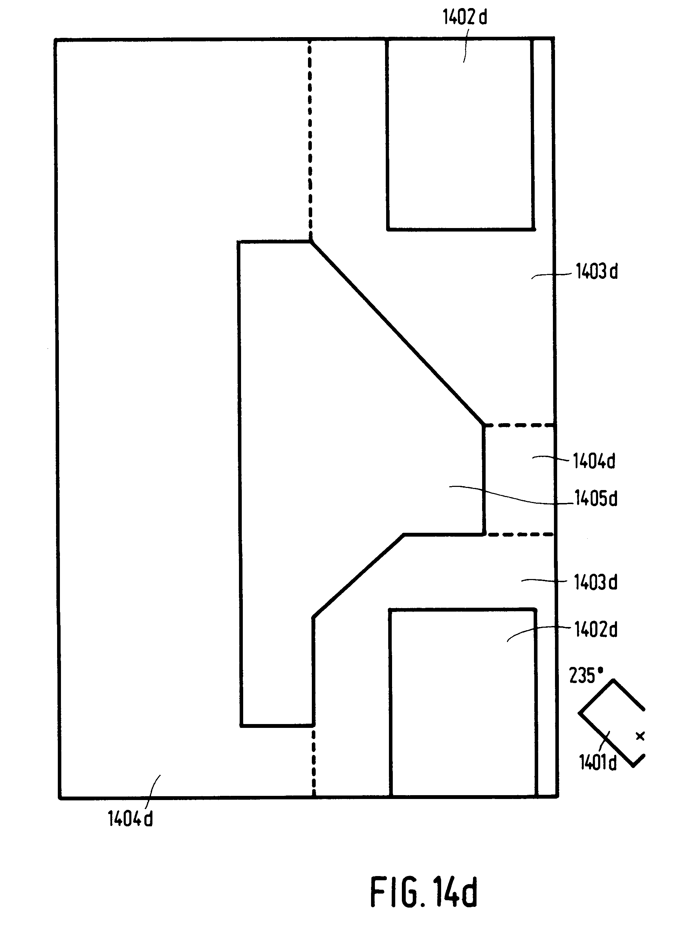

The obstacles 1203 and 1204 will have different shapes in configuration space depending on the angle $\phi$ of the car 1201. Figures 14 a, b, c, and d, illustrate $\phi$ planes of the configuration space showing obstacle regions for obstacles similar to 1203 and 1204.

Figure 14a shows the $\phi=180°$ plane of the configuration space. The car is illustrated schematically at 1401a, where it is pictured at the angle $\phi=180°$. Regions 1402a correspond to the size of real obstacles in task space. Regions 1403a correspond to additional space which the Cartesian point location of the car cannot enter because of the surface area covered by the car. Regions 1404a correspond to areas which the Cartesian point location of the car cannot enter because of selected boundaries of the task space, for instance curbs on a road. Region 1405a represents the area in which the Cartesian point location of the car is free to move. Figures 14b-14d illustrate the same configuration space as Figure 14a, but in the $\phi$=90°, 270°, and 235° planes, respectively.

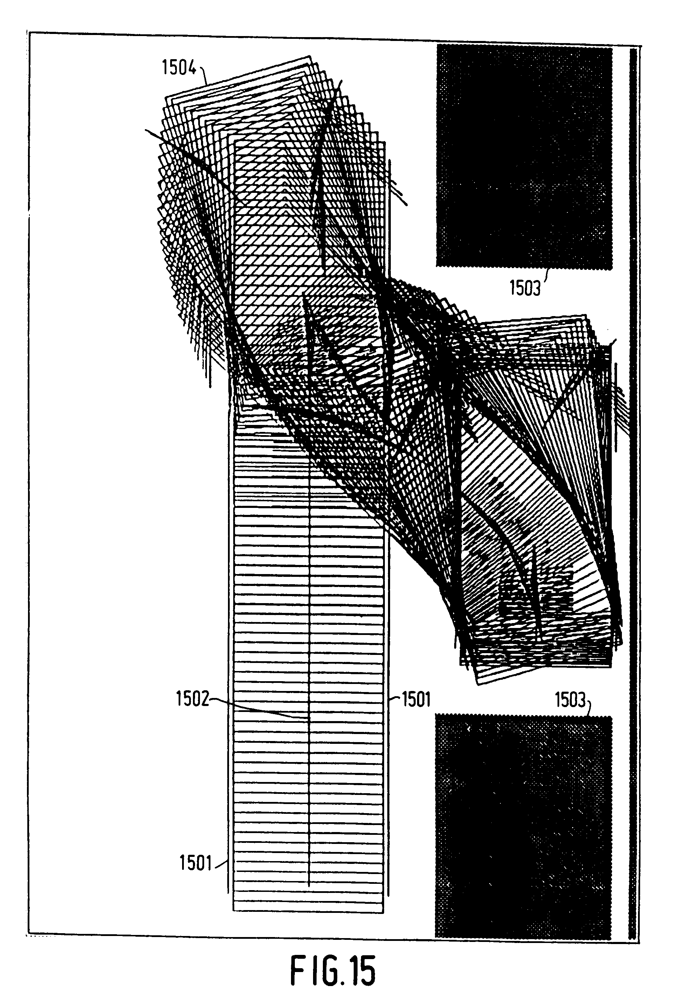

Figure 15 is a screen image of a sun workstation running of a simulation. The screen image shows a superposition of images of the car 1202 as it moves through the poses associated with states along a path which parallel parks the car. Obstacles 1503 represent parked cars. The path followed by the rear wheels is marked 1501. The pivot point at the rear differential moves along 1502. 1504 marks the front of the car.

## TABLE I

```
dir  : dist  dx dy dφ
carangle 0
     dir  0: 0.250    1  0  0     dir  1: 0.500    2  0  0     dir  2: 0.750    3  0  0
     dir  3: 1.000    4  0  0     dir  4: 0.250    1  0  0     dir  5: 0.502    2  0  1
     dir  6: 0.757    3  0  2     dir  7: 1.017    4  0  3     dir  8: 0.250    1  0  0
     dir  9: 0.502    2  0 -1     dir 10: 0.757    3  0 -2     dir 11: 1.017    4  0 -3
     dir 12: 0.250   -1  0  0     dir 13: 0.500   -2  0  0     dir 14: 0.750   -3  0  0
     dir 15: 1.000   -4  0  0     dir 16: 0.250   -1  0  0     dir 17: 0.502   -2  0 -1
     dir 18: 0.757   -3  0 -2     dir 19: 1.017   -4  0 -3     dir 20: 0.250   -1  0  0
     dir 21: 0.502   -2  0  1     dir 22: 0.757   -3  0  2     dir 23: 1.017   -4  0  3
carangle 1
     dir  0: 0.250    0  0  0     dir  1: 0.500    1  0  0     dir  2: 0.750    2  0  0
     dir  3: 1.000    3  0  0     dir  4: 0.250    0  0  0     dir  5: 0.502    1  0  1
     dir  6: 0.757    2  0  2     dir  7: 1.017    3  0  3     dir  8: 0.250    0  0  0
     dir  9: 0.502    1  0 -1     dir 10: 0.757    2  0 -2     dir 11: 1.017    4  0 -3
     dir 12: 0.250    0  0  0     dir 13: 0.500   -1  0  0     dir 14: 0.750   -2  0  0
     dir 15: 1.000   -3  0  0     dir 16: 0.250    0  0  0     dir 17: 0.502   -1  0 -1
     dir 18: 0.757   -2  0 -2     dir 19: 1.017   -4  0 -3     dir 20: 0.250    0  0  0
     dir 21: 0.502   -1  0  1     dir 22: 0.757   -2  0  2     dir 23: 1.017   -3  0  3
carangle 2
     dir  0: 0.250    0  0  0     dir  1: 0.500    1  0  0     dir  2: 0.750    2  0  0
     dir  3: 1.000    3  0  0     dir  4: 0.250    0  0  0     dir  5: 0.502    1  0  1
     dir  6: 0.757    2  0  2     dir  7: 1.017    3  1  3     dir  8: 0.250    0  0  0
     dir  9: 0.502    1  0 -1     dir 10: 0.757    2  0 -2     dir 11: 1.017    3  0 -3
     dir 12: 0.250    0  0  0     dir 13: 0.500   -1  0  0     dir 14: 0.750   -2  0  0
     dir 15: 1.000   -3  0  0     dir 16: 0.250    0  0  0     dir 17: 0.502   -1  0 -1
     dir 18: 0.757   -2  0 -2     dir 19: 1.017   -3  0 -3     dir 20: 0.250    0  0  0
     dir 21: 0.502   -1  0  1     dir 22: 0.757   -2  0  2     dir 23: 1.017   -3 -1  3
carangle 3
     dir  0: 0.250    0  0  0     dir  1: 0.500    1  0  0     dir  2: 0.750    2  0  0
     dir  3: 1.000    3  1  0     dir  4: 0.250    0  0  0     dir  5: 0.502    1  0  1
     dir  6: 0.757    2  0  2     dir  7: 1.017    3  1  3     dir  8: 0.250    0  0  0
     dir  9: 0.502    1  0 -1     dir 10: 0.757    2  0 -2     dir 11: 1.017    3  0 -3
     dir 12: 0.250    0  0  0     dir 13: 0.500   -1  0  0     dir 14: 0.750   -2  0  0
     dir 15: 1.000   -3 -1  0     dir 16: 0.250    0  0  0     dir 17: 0.502   -1  0 -1
     dir 18: 0.757   -2  0 -2     dir 19: 1.017   -3  0 -3     dir 20: 0.250    0  0  0
     dir 21: 0.502   -1  0  1     dir 22: 0.757   -2  0  2     dir 23: 1.017   -3 -1  3
carangle 4
     dir  0: 0.250    0  0  0     dir  1: 0.500    1  0  0     dir  2: 0.750    2  1  0
     dir  3: 1.000    3  1  0     dir  4: 0.250    0  0  0     dir  5: 0.502    1  0  1
     dir  6: 0.757    2  1  2     dir  7: 1.017    3  1  3     dir  8: 0.250    0  0  0
     dir  9: 0.502    1  0 -1     dir 10: 0.757    2  1 -2     dir 11: 1.017    3  1 -3
     dir 12: 0.250    0  0  0     dir 13: 0.500   -1  0  0     dir 14: 0.750   -2 -1  0
     dir 15: 1.000   -3 -1  0     dir 16: 0.250    0  0  0     dir 17: 0.502   -1  0 -1
     dir 18: 0.757   -2 -1 -2     dir 19: 1.017   -3 -1 -3     dir 20: 0.250    0  0  0
     dir 21: 0.502   -1  0  1     dir 22: 0.757   -2 -1  2     dir 23: 1.017   -3 -1  3
carangle 5
     dir  0: 0.250    0  0  0     dir  1: 0.500    1  0  0     dir  2: 0.750    2  1  0
     dir  3: 1.000    3  1  0     dir  4: 0.250    0  0  0     dir  5: 0.502    1  0  1
     dir  6: 0.757    2  1  2     dir  7: 1.017    3  2  3     dir  8: 0.250    0  0  0
     dir  9: 0.502    1  0 -1     dir 10: 0.757    2  1 -2     dir 11: 1.017    3  1 -3
     dir 12: 0.250    0  0  0     dir 13: 0.500   -1  0  0     dir 14: 0.750   -2 -1  0
     dir 15: 1.000   -3 -1  0     dir 16: 0.250    0  0  0     dir 17: 0.502   -1  0 -1
     dir 18: 0.757   -2 -1 -2     dir 19: 1.017   -3 -1 -3     dir 20: 0.250    0  0  0
     dir 21: 0.502   -1  0  1     dir 22: 0.757   -2 -1  2     dir 23: 1.017   -3 -2  3
carangle 6
     dir  0: 0.250    0  0  0     dir  1: 0.500    1  1  0     dir  2: 0.750    2  1  0
     dir  3: 1.000    3  2  0     dir  4: 0.250    0  0  0     dir  5: 0.502    1  1  1
     dir  6: 0.757    2  1  2     dir  7: 1.017    3  2  3     dir  8: 0.250    0  0  0
     dir  9: 0.502    1  1 -1     dir 10: 0.757    2  1 -2     dir 11: 1.017    3  2 -3
     dir 12: 0.250    0  0  0     dir 13: 0.500   -1 -1  0     dir 14: 0.750   -2 -1  0
     dir 15: 1.000   -3 -2  0     dir 16: 0.250    0  0  0     dir 17: 0.502   -1 -1 -1
     dir 18: 0.757   -2 -1 -2     dir 19: 1.017   -3 -2 -3     dir 20: 0.250    0  0  0
     dir 21: 0.502   -1 -1  1     dir 22: 0.757   -2 -1  2     dir 23: 1.017   -3 -2  3
carangle 7
     dir  0: 0.250    0  0  0     dir  1: 0.500    1  1  0     dir  2: 0.750    2  1  0
     dir  3: 1.000    3  2  0     dir  4: 0.250    0  0  0     dir  5: 0.502    1  1  1
     dir  6: 0.757    2  1  2     dir  7: 1.017    2  2  3     dir  8: 0.250    0  0  0
     dir  9: 0.502    1  1 -1     dir 10: 0.757    2  1 -2     dir 11: 1.017    3  2 -3
     dir 12: 0.250    0  0  0     dir 13: 0.500   -1 -1  0     dir 14: 0.750   -2 -1  0
     dir 15: 1.000   -3 -2  0     dir 16: 0.250    0  0  0     dir 17: 0.502   -1 -1 -1
     dir 18: 0.757   -2 -1 -2     dir 19: 1.017   -3 -2 -3     dir 20: 0.250    0  0  0
     dir 21: 0.502   -1 -1  1     dir 22: 0.757   -2 -1  2     dir 23: 1.017   -2 -2  3
carangle 8
     dir  0: 0.250    0  0  0     dir  1: 0.500    1  1  0     dir  2: 0.750    2  2  0
     dir  3: 1.000    2  2  0     dir  4: 0.250    0  0  0     dir  5: 0.502    1  1  1
     dir  6: 0.757    2  2  2     dir  7: 1.017    2  3  3     dir  8: 0.250    0  0  0
     dir  9: 0.502    1  1 -1     dir 10: 0.757    2  1 -2     dir 11: 1.017    3  2 -3
     dir 12: 0.250    0  0  0     dir 13: 0.500   -1 -1  0     dir 14: 0.750   -2 -2  0
     dir 15: 1.000   -2 -2  0     dir 16: 0.250    0  0  0     dir 17: 0.502   -1 -1 -1
     dir 18: 0.757   -2 -2 -2     dir 19: 1.017   -3 -2 -3     dir 20: 0.250    0  0  0
     dir 21: 0.502   -1 -1  1     dir 22: 0.757   -2 -2  2     dir 23: 1.017   -2 -3  3
carangle 9
     dir  0: 0.250    0  0  0     dir  1: 0.500    1  1  0     dir  2: 0.750    1  2  0
     dir  3: 1.000    2  3  0     dir  4: 0.250    0  0  0     dir  5: 0.502    1  1  1
     dir  6: 0.757    1  2  2     dir  7: 1.017    2  3  3     dir  8: 0.250    0  0  0
```

TABLE I

```
        dir  9: 0.502    1  1 -1    dir 10: 0.757    1  2 -2    dir 11: 1.017    2  2 -3
        dir 12: 0.250    0  0  0    dir 13: 0.500   -1 -1  0    dir 14: 0.750   -1 -2  0
        dir 15: 1.000   -2 -3  0    dir 16: 0.250    0  0  0    dir 17: 0.502   -- -1 -1
        dir 18: 0.757   -1 -2 -2    dir 19: 1.017   -2 -2 -3    dir 20: 0.250    0  0  0
        dir 21: 0.502   -1 -1  1    dir 22: 0.757   -1 -2  2    dir 23: 1.017   -2 -3  3
carangle 10
        dir  0: 0.250    0  0  0    dir  1: 0.500    1  1  0    dir  2: 0.750    1  2  0
        dir  3: 1.000    2  3  0    dir  4: 0.250    0  0  0    dir  5: 0.502    1  1  1
        dir  6: 0.757    1  2  2    dir  7: 1.017    2  3  3    dir  8: 0.250    0  0  0
        dir  9: 0.502    1  1 -1    dir 10: 0.757    1  2 -2    dir 11: 1.017    2  3 -3
        dir 12: 0.250    0  0  0    dir 13: 0.500   -1 -1  0    dir 14: 0.750   -1 -2  0
        dir 15: 1.000   -2 -3  0    dir 16: 0.250    0  0  0    dir 17: 0.502   -1 -1 -1
        dir 18: 0.757   -1 -2 -2    dir 19: 1.017   -2 -3 -3    dir 20: 0.250    0  0  0
        dir 21: 0.502   -1 -1  1    dir 22: 0.757   -1 -2  2    dir 23: 1.017   -2 -3  3
carangle 11
        dir  0: 0.250    0  0  0    dir  1: 0.500    0  1  0    dir  2: 0.750    1  2  0
        dir  3: 1.000    1  3  0    dir  4: 0.250    0  0  0    dir  5: 0.502    0  1  1
        dir  6: 0.757    1  2  2    dir  7: 1.017    1  3  3    dir  8: 0.250    0  0  0
        dir  9: 0.502    0  1 -1    dir 10: 0.757    1  2 -2    dir 11: 1.017    2  3 -3
        dir 12: 0.250    0  0  0    dir 13: 0.500    0 -1  0    dir 14: 0.750   -1 -2  0
        dir 15: 1.000   -1 -3  0    dir 16: 0.250    0  0  0    dir 17: 0.502    0 -1 -1
        dir 18: 0.757   -1 -2 -2    dir 19: 1.017   -2 -3 -3    dir 20: 0.250    0  0  0
        dir 21: 0.502    0 -1  1    dir 22: 0.757   -1 -2  2    dir 23: 1.017   -1 -3  3
carangle 12
        dir  0: 0.250    0  0  0    dir  1: 0.500    0  1  0    dir  2: 0.750    1  2  0
        dir  3: 1.000    1  3  0    dir  4: 0.250    0  0  0    dir  5: 0.502    0  1  1
        dir  6: 0.757    1  2  2    dir  7: 1.017    1  3  3    dir  8: 0.250    0  0  0
        dir  9: 0.502    0  1 -1    dir 10: 0.757    1  2 -2    dir 11: 1.017    1  3 -3
        dir 12: 0.250    0  0  0    dir 13: 0.500    0 -1  0    dir 14: 0.750   -1 -2  0
        dir 15: 1.000   -1 -3  0    dir 16: 0.250    0  0  0    dir 17: 0.502    0 -1 -1
        dir 18: 0.757   -1 -2 -2    dir 19: 1.017   -1 -3 -3    dir 20: 0.250    0  0  0
        dir 21: 0.502    0 -1  1    dir 22: 0.757   -1 -2  2    dir 23: 1.017   -1 -3  3
carangle 13
        dir  0: 0.250    0  0  0    dir  1: 0.500    0  1  0    dir  2: 0.750    0  2  0
        dir  3: 1.000    1  3  0    dir  4: 0.250    0  0  0    dir  5: 0.502    0  1  1
        dir  6: 0.757    0  2  2    dir  7: 1.017    0  3  3    dir  8: 0.250    0  0  0
        dir  9: 0.502    0  1 -1    dir 10: 0.757    0  2 -2    dir 11: 1.017    1  3 -3
        dir 12: 0.250    0  0  0    dir 13: 0.500    0 -1  0    dir 14: 0.750    0 -2  0
        dir 15: 1.000   -1 -3  0    dir 16: 0.250    0  0  0    dir 17: 0.502    0 -1 -1
        dir 18: 0.757    0 -2 -2    dir 19: 1.017   -1 -3 -3    dir 20: 0.250    0  0  0
        dir 21: 0.502    0 -1  1    dir 22: 0.757    0 -2  2    dir 23: 1.017    0 -3  3
carangle 14
        dir  0: 0.250    0  0  0    dir  1: 0.500    0  1  0    dir  2: 0.750    0  2  0
        dir  3: 1.000    0  3  0    dir  4: 0.250    0  0  0    dir  5: 0.502    0  1  1
        dir  6: 0.757    0  2  2    dir  7: 1.017    0  3  3    dir  8: 0.250    0  0  0
        dir  9: 0.502    0  1 -1    dir 10: 0.757    0  2 -2    dir 11: 1.017    1  3 -3
        dir 12: 0.250    0  0  0    dir 13: 0.500    0 -1  0    dir 14: 0.750    0 -2  0
        dir 15: 1.000    0 -3  0    dir 16: 0.250    0  0  0    dir 17: 0.502    0 -1 -1
        dir 18: 0.757    0 -2 -2    dir 19: 1.017   -1 -3 -3    dir 20: 0.250    0  0  0
        dir 21: 0.502    0 -1  1    dir 22: 0.757    0 -2  2    dir 23: 1.017    0 -3  3
carangle 15
        dir  0: 0.250    0  0  0    dir  1: 0.500    0  1  0    dir  2: 0.750    0  2  0
        dir  3: 1.000    0  3  0    dir  4: 0.250    0  0  0    dir  5: 0.502    0  1  1
        dir  6: 0.757    0  2  2    dir  7: 1.017    0  4  3    dir  8: 0.250    0  0  0
        dir  9: 0.502    0  1 -1    dir 10: 0.757    0  2 -2    dir 11: 1.017    0  3 -3
        dir 12: 0.250    0  0  0    dir 13: 0.500    0 -1  0    dir 14: 0.750    0 -2  0
        dir 15: 1.000    0 -3  0    dir 16: 0.250    0  0  0    dir 17: 0.502    0 -1 -1
        dir 18: 0.757    0 -2 -2    dir 19: 1.017    0 -3 -3    dir 20: 0.250    0  0  0
        dir 21: 0.502    0 -1  1    dir 22: 0.757    0 -2  2    dir 23: 1.017    0 -4  3
carangle 16
        dir  0: 0.250    0  1  0    dir  1: 0.500    0  2  0    dir  2: 0.750    0  3  0
        dir  3: 1.000    0  4  0    dir  4: 0.250    0  1  0    dir  5: 0.502    0  2  1
        dir  6: 0.757    0  3  2    dir  7: 1.017    0  4  3    dir  8: 0.250    0  1  0
        dir  9: 0.502    0  2 -1    dir 10: 0.757    0  3 -2    dir 11: 1.017    0  4 -3
        dir 12: 0.250    0 -1  0    dir 13: 0.500    0 -2  0    dir 14: 0.750    0 -3  0
        dir 15: 1.000    0 -4  0    dir 16: 0.250    0 -1  0    dir 17: 0.502    0 -2 -1
        dir 18: 0.757    0 -3 -2    dir 19: 1.017    0 -4 -3    dir 20: 0.250    0 -1  0
        dir 21: 0.502    0 -2  1    dir 22: 0.757    0 -3  2    dir 23: 1.017    0 -4  3
carangle 17
        dir  0: 0.250    0  0  0    dir  1: 0.500    0  1  0    dir  2: 0.750    0  2  0
        dir  3: 1.000    0  3  0    dir  4: 0.250    0  0  0    dir  5: 0.502    0  1  1
        dir  6: 0.757    0  2  2    dir  7: 1.017    0  3  3    dir  8: 0.250    0  0  0
        dir  9: 0.502    0  1 -1    dir 10: 0.757    0  2 -2    dir 11: 1.017    0  4 -3
        dir 12: 0.250    0  0  0    dir 13: 0.500    0 -1  0    dir 14: 0.750    0 -2  0
        dir 15: 1.000    0 -3  0    dir 16: 0.250    0  0  0    dir 17: 0.502    0 -1 -1
        dir 18: 0.757    0 -2 -2    dir 19: 1.017    0 -4 -3    dir 20: 0.250    0  0  0
        dir 21: 0.502    0 -1  1    dir 22: 0.757    0 -2  2    dir 23: 1.017    0 -3  3
carangle 18
        dir  0: 0.250    0  0  0    dir  1: 0.500    0  1  0    dir  2: 0.750    0  2  0
        dir  3: 1.000    0  3  0    dir  4: 0.250    0  0  0    dir  5: 0.502    0  1  1
        dir  6: 0.757    0  2  2    dir  7: 1.017   -1  3  3    dir  8: 0.250    0  0  0
        dir  9: 0.502    0  1 -1    dir 10: 0.757    0  2 -2    dir 11: 1.017    0  3 -3
        dir 12: 0.250    0  0  0    dir 13: 0.500    0 -1  0    dir 14: 0.750    0 -2  0
        dir 15: 1.000    0 -3  0    dir 16: 0.250    0  0  0    dir 17: 0.502    0 -1 -1
        dir 18: 0.757    0 -2 -2    dir 19: 1.017    0 -3 -3    dir 20: 0.250    0  0  0
        dir 21: 0.502    0 -1  1    dir 22: 0.757    0 -2  2    dir 23: 1.017    1 -3  3
```

TABLE I

```
carangle 19
  dir  0: 0.250    0  0  0      dir  1: 0.500    0  1  0      dir  2: 0.750    0  2  0
  dir  3: 1.000   -1  3  0      dir  4: 0.250    0  0  0      dir  5: 0.502    0  1  1
  dir  6: 0.757    0  2  2      dir  7: 1.017   -1  3  3      dir  8: 0.250    0  0  0
  dir  9: 0.502    0  1 -1      dir 10: 0.757    0  2 -2      dir 11: 1.017    0  3 -3
  dir 12: 0.250    0  0  0      dir 13: 0.500    0 -1  0      dir 14: 0.750    0 -2  0
  dir 15: 1.000    1 -3  0      dir 16: 0.250    0  0  0      dir 17: 0.502    0 -1 -1
  dir 18: 0.757    0 -2 -2      dir 19: 1.017    0 -3 -3      dir 20: 0.250    0  0  0
  dir 21: 0.502    0 -1  1      dir 22: 0.757    0 -2  2      dir 23: 1.017    1 -3  3
carangle 20
  dir  0: 0.250    0  0  0      dir  1: 0.500    0  1  0      dir  2: 0.750   -1  2  0
  dir  3: 1.000   -1  3  0      dir  4: 0.250    0  0  0      dir  5: 0.502    0  1  1
  dir  6: 0.757   -1  2  2      dir  7: 1.017   -1  3  3      dir  8: 0.250    0  0  0
  dir  9: 0.502    0  1 -1      dir 10: 0.757   -1  2 -2      dir 11: 1.017   -1  3 -3
  dir 12: 0.250    0  0  0      dir 13: 0.500    0 -1  0      dir 14: 0.750    1 -2  0
  dir 15: 1.000    1 -3  0      dir 16: 0.250    0  0  0      dir 17: 0.502    0 -1 -1
  dir 18: 0.757    1 -2 -2      dir 19: 1.017    1 -3 -3      dir 20: 0.250    0  0  0
  dir 21: 0.502    0 -1  1      dir 22: 0.757    1 -2  2      dir 23: 1.017    1 -3  3
carangle 21
  dir  0: 0.250    0  0  0      dir  1: 0.500    0  1  0      dir  2: 0.750   -1  2  0
  dir  3: 1.000   -1  3  0      dir  4: 0.250    0  0  0      dir  5: 0.502    0  1  1
  dir  6: 0.757   -1  2  2      dir  7: 1.017   -2  3  3      dir  8: 0.250    0  0  0
  dir  9: 0.502    0  1 -1      dir 10: 0.757   -1  2 -2      dir 11: 1.017   -1  3 -3
  dir 12: 0.250    0  0  0      dir 13: 0.500    0 -1  0      dir 14: 0.750    1 -2  0
  dir 15: 1.000    1 -3  0      dir 16: 0.250    0  0  0      dir 17: 0.502    0 -1 -1
  dir 18: 0.757    1 -2 -2      dir 19: 1.017    1 -3 -3      dir 20: 0.250    0  0  0
  dir 21: 0.502    0 -1  1      dir 22: 0.757    1 -2  2      dir 23: 1.017    2 -3  3
carangle 22
  dir  0: 0.250    0  0  0      dir  1: 0.500   -1  1  0      dir  2: 0.750   -1  2  0
  dir  3: 1.000   -2  3  0      dir  4: 0.250    0  0  0      dir  5: 0.502   -1  1  1
  dir  6: 0.757   -1  2  2      dir  6: 1.017   -2  3  3      dir  8: 0.250    0  0  0
  dir  9: 0.502   -1  1 -1      dir 10: 0.757   -1  2 -2      dir 11: 1.017   -2  3 -3
  dir 12: 0.250    0  0  0      dir 13: 0.500    1 -1  0      dir 14: 0.750    1 -2  0
  dir 15: 1.000    2 -3  0      dir 16: 0.250    0  0  0      dir 17: 0.502    1 -1 -1
  dir 18: 0.757    1 -2 -2      dir 19: 1.017    2 -3 -3      dir 20: 0.250    0  0  0
  dir 21: 0.502    1 -1  1      dir 22: 0.757    1 -2  2      dir 23: 1.017    2 -3  3
carangle 23
  dir  0: 0.250    0  0  0      dir  1: 0.500   -1  1  0      dir  2: 0.750   -1  2  0
  dir  3: 1.000   -2  3  0      dir  4: 0.250    0  0  0      dir  5: 0.502   -1  1  1
  dir  6: 0.757   -1  2  2      dir  7: 1.017   -2  2  3      dir  8: 0.250    0  0  0
  dir  9: 0.502   -1  1 -1      dir 10: 0.757   -1  2 -2      dir 11: 1.017   -2  3 -3
  dir 12: 0.250    0  0  0      dir 13: 0.500    1 -1  0      dir 14: 0.750    1 -2  0
  dir 15: 1.000    2 -3  0      dir 16: 0.250    0  0  0      dir 17: 0.502    1 -1 -1
  dir 18: 0.757    1 -2 -2      dir 19: 1.017    2 -3 -3      dir 20: 0.250    0  0  0
  dir 21: 0.502    1 -1  1      dir 22: 0.757    1 -2  2      dir 23: 1.017    2 -2  3
carangle 24
  dir  0: 0.250    0  0  0      dir  1: 0.500   -1  1  0      dir  2: 0.750   -2  2  0
  dir  3: 1.000   -2  2  0      dir  4: 0.250    0  0  0      dir  5: 0.502   -1  1  1
  dir  6: 0.757   -2  2  2      dir  7: 1.017   -3  2  3      dir  8: 0.250    0  0  0
  dir  9: 0.502   -1  1 -1      dir 10: 0.757   -2  2 -2      dir 11: 1.017   -2  3 -3
  dir 12: 0.250    0  0  0      dir 13: 0.500    1 -1  0      dir 14: 0.750    2 -2  0
  dir 15: 1.000    2 -2  0      dir 16: 0.250    0  0  0      dir 17: 0.502    1 -1 -1
  dir 18: 0.757    2 -2 -2      dir 19: 1.017    2 -3 -3      dir 20: 0.250    0  0  0
  dir 21: 0.502    1 -1  1      dir 22: 0.757    2 -2  2      dir 23: 1.017    3 -2  3
carangle 25
  dir  0: 0.250    0  0  0      dir  1: 0.500   -1  1  0      dir  2: 0.750   -2  1  0
  dir  3: 1.000   -3  2  0      dir  4: 0.250    0  0  0      dir  5: 0.502   -1  1  1
  dir  6: 0.757   -2  1  2      dir  6: 1.017   -3  2  3      dir  8: 0.250    0  0  0
  dir  9: 0.502   -1  1 -1      dir 10: 0.757   -2  1 -2      dir 11: 1.017   -2  2 -3
  dir 12: 0.250    0  0  0      dir 13: 0.500    1 -1  0      dir 14: 0.750    2 -1  0
  dir 15: 1.000    3 -2  0      dir 16: 0.250    0  0  0      dir 17: 0.502    1 -1 -1
  dir 18: 0.757    2 -1 -2      dir 19: 1.017    2 -2 -3      dir 20: 0.250    0  0  0
  dir 21: 0.502    1 -1  1      dir 22: 0.757    2 -1  2      dir 23: 1.017    3 -2  3
carangle 26
  dir  0: 0.250    0  0  0      dir  1: 0.500   -1  1  0      dir  2: 0.750   -2  1  0
  dir  3: 1.000   -3  2  0      dir  4: 0.250    0  0  0      dir  5: 0.502   -1  1  1
  dir  6: 0.757   -2  1  2      dir  7: 1.017   -3  2  3      dir  8: 0.250    0  0  0
  dir  9: 0.502   -1  1 -1      dir 10: 0.757   -2  1 -2      dir 11: 1.017   -3  2 -3
  dir 12: 0.250    0  0  0      dir 13: 0.500    1 -1  0      dir 14: 0.750    2 -1  0
  dir 15: 1.000    3 -2  0      dir 16: 0.250    0  0  0      dir 17: 0.502    1 -1 -1
  dir 18: 0.757    2 -1 -2      dir 19: 1.017    3 -2 -3      dir 20: 0.250    0  0  0
  dir 21: 0.502    1 -1  1      dir 22: 0.757    2 -1  2      dir 23: 1.017    3 -2  3
carangle 27
  dir  0: 0.250    0  0  0      dir  1: 0.500   -1  0  0      dir  2: 0.750   -2  1  0
  dir  3: 1.000   -3  1  0      dir  4: 0.250    0  0  0      dir  5: 0.502   -1  0  1
  dir  6: 0.757   -2  1  2      dir  7: 1.017   -3  1  3      dir  8: 0.250    0  0  0
  dir  9: 0.502   -1  0 -1      dir 10: 0.757   -2  1 -2      dir 11: 1.017   -3  2 -3
  dir 12: 0.250    0  0  0      dir 13: 0.500    1  0  0      dir 14: 0.750    2 -1  0
  dir 15: 1.000    3 -1  0      dir 16: 0.250    0  0  0      dir 17: 0.502    1  0 -1
  dir 18: 0.757    2 -1 -2      dir 19: 1.017    3 -2 -3      dir 20: 0.250    0  0  0
  dir 21: 0.502    1  0  1      dir 22: 0.757    2 -1  2      dir 23: 1.017    3 -1  3
carangle 28
  dir  0: 0.250    0  0  0      dir  1: 0.500   -1  0  0      dir  2: 0.750   -2  1  0
  dir  3: 1.000   -3  1  0      dir  4: 0.250    0  0  0      dir  5: 0.502   -1  0  1
  dir  6: 0.757   -2  1  2      dir  7: 1.017   -3  1  3      dir  8: 0.250    0  0 -3
  dir  9: 0.502   -1  0 -1      dir 10: 0.757   -2  1 -2      dir 11: 1.017   -3  1 -3
```

17

TABLE I

```
        dir 12: 0.250   0  0  0     dir 13: 0.500   1  0  0     dir 14: 0.750   2 -1  0
        dir 15: 1.000   3 -1  0     dir 16: 0.250   0  0  0     dir 17: 0.502   1  0 -1
        dir 18: 0.757   2 -1 -2     dir 19: 1.017   3 -1 -3     dir 20: 0.250   0  0  0
        dir 21: 0.502   1  0  1     dir 22: 0.757   2 -1  2     dir 23: 1.017   3 -1  3
carangle 29
        dir  0: 0.250   0  0  0     dir  1: 0.500  -1  0  0     dir  2: 0.750  -2  0  0
        dir  3: 1.000  -3  1  0     dir  4: 0.250   0  0  0     dir  5: 0.502  -1  0  1
        dir  6: 0.757  -2  0  2     dir  7: 1.017  -3  0  3     dir  8: 0.250   0  0  0
        dir  9: 0.502  -1  0 -1     dir 10: 0.757  -2  0 -2     dir 11: 1.017  -3  1 -3
        dir 12: 0.250   0  0  0     dir 13: 0.500   1  0  0     dir 14: 0.750   2  0  0
        dir 15: 1.000   3 -1  0     dir 16: 0.250   0  0  0     dir 17: 0.502   1  0 -1
        dir 18: 0.757   2  0 -2     dir 19: 1.017   3 -1 -3     dir 20: 0.250   0  0  0
        dir 21: 0.502   1  0  1     dir 22: 0.757   2  0  2     dir 23: 1.017   3  0  3
carangle 30
        dir  0: 0.250   0  0  0     dir  1: 0.500  -1  0  0     dir  2: 0.750  -2  0  0
        dir  3: 1.000  -3  0  0     dir  4: 0.250   0  0  0     dir  5: 0.502  -1  0  1
        dir  6: 0.757  -2  0  2     dir  7: 1.017  -3  0  3     dir  8: 0.250   0  0  0
        dir  9: 0.502  -1  0 -1     dir 10: 0.757  -2  0 -2     dir 11: 1.017  -3  1 -3
        dir 12: 0.250   0  0  0     dir 13: 0.500   1  0  0     dir 14: 0.750   2  0  0
        dir 15: 1.000   3  0  0     dir 16: 0.250   0  0  0     dir 17: 0.502   1  0 -1
        dir 18: 0.757   2  0 -2     dir 19: 1.017   3 -1 -3     dir 20: 0.250   0  0  0
        dir 21: 0.502   1  0  1     dir 22: 0.757   2  0  2     dir 23: 1.017   3  0  3
carangle 31
        dir  0: 0.250   0  0  0     dir  1: 0.500  -1  0  0     dir  2: 0.750  -2  0  0
        dir  3: 1.000  -3  0  0     dir  4: 0.250   0  0  0     dir  5: 0.502  -1  0  1
        dir  6: 0.757  -2  0  2     dir  7: 1.017  -4  0  3     dir  8: 0.250   0  0  0
        dir  9: 0.502  -1  0 -1     dir 10: 0.757  -2  0 -2     dir 11: 1.017  -3  0 -3
        dir 12: 0.250   0  0  0     dir 13: 0.500   1  0  0     dir 14: 0.750   2  0  0
        dir 15: 1.000   3  0  0     dir 16: 0.250   0  0  0     dir 17: 0.502   1  0 -1
        dir 18: 0.757   2  0 -2     dir 19: 1.017   3  0 -3     dir 20: 0.250   0  0  0
        dir 21: 0.502   1  0  1     dir 22: 0.757   2  0  2     dir 23: 1.017   4  0  3
carangle 32
        dir  0: 0.250  -1  0  0     dir  1: 0.500  -2  0  0     dir  2: 0.750  -3  0  0
        dir  3: 1.000  -4  0  0     dir  4: 0.250  -1  0  0     dir  5: 0.502  -2  0  1
        dir  6: 0.757  -3  0  2     dir  7: 1.017  -4  0  3     dir  8: 0.250  -1  0  0
        dir  9: 0.502  -2  0 -1     dir 10: 0.757  -3  0 -2     dir 11: 1.017  -4  0 -3
        dir 12: 0.250   1  0  0     dir 13: 0.500   2  0  0     dir 14: 0.750   3  0  0
        dir 15: 1.000   4  0  0     dir 16: 0.250   1  0  0     dir 17: 0.502   2  0 -1
        dir 18: 0.757   3  0 -2     dir 19: 1.017   4  0 -3     dir 20: 0.250   1  0  0
        dir 21: 0.502   2  0  1     dir 22: 0.757   3  0  2     dir 23: 1.017   4  0  3
carangle 33
        dir  0: 0.250   0  0  0     dir  1: 0.500  -1  0  0     dir  2: 0.750  -2  0  0
        dir  3: 1.000  -3  0  0     dir  4: 0.250   0  0  0     dir  5: 0.502  -1  0  1
        dir  6: 0.757  -2  0  2     dir  7: 1.017  -3  0  3     dir  8: 0.250   0  0  0
        dir  9: 0.502  -1  0 -1     dir 10: 0.757  -2  0 -2     dir 11: 1.017  -4  0 -3
        dir 12: 0.250   0  0  0     dir 13: 0.500   1  0  0     dir 14: 0.750   2  0  0
        dir 15: 1.000   3  0  0     dir 16: 0.250   0  0  0     dir 17: 0.502   1  0 -1
        dir 18: 0.757   2  0 -2     dir 19: 1.017   4  0 -3     dir 20: 0.250   0  0  0
        dir 21: 0.502   1  0  1     dir 22: 0.757   2  0  2     dir 23: 1.017   3  0  3
carangle 34
        dir  0: 0.250   0  0  0     dir  1: 0.500  -1  0  0     dir  2: 0.750  -2  0  0
        dir  3: 1.000  -3  0  0     dir  4: 0.250   0  0  0     dir  5: 0.502  -1  0  1
        dir  6: 0.757  -2  0  2     dir  7: 1.017  -3 -1  3     dir  8: 0.250   0  0  0
        dir  9: 0.502  -1  0 -1     dir 10: 0.757  -2  0 -2     dir 11: 1.017  -3  0 -3
        dir 12: 0.250   0  0  0     dir 13: 0.500   1  0  0     dir 14: 0.750   2  0  0
        dir 15: 1.000   3  0  0     dir 16: 0.250   0  0  0     dir 17: 0.502   1  0 -1
        dir 18: 0.757   2  0 -2     dir 19: 1.017   3  0 -3     dir 20: 0.250   0  0  0
        dir 21: 0.502   1  0  1     dir 22: 0.757   2  0  2     dir 23: 1.017   3  1  3
carangle 35
        dir  0: 0.250   0  0  0     dir  1: 0.500  -1  0  0     dir  2: 0.750  -2  0  0
        dir  3: 1.000  -3 -1  0     dir  4: 0.250   0  0  0     dir  5: 0.502  -1  0  1
        dir  6: 0.757  -2  0  2     dir  7: 1.017  -3 -1  3     dir  8: 0.250   0  0  0
        dir  9: 0.502  -1  0 -1     dir 10: 0.757  -2  0 -2     dir 11: 1.017  -3  0 -3
        dir 12: 0.250   0  0  0     dir 13: 0.500   1  0  0     dir 14: 0.750   2  0  0
        dir 15: 1.000   3  1  0     dir 16: 0.250   0  0  0     dir 17: 0.502   1  0 -1
        dir 18: 0.757   2  0 -2     dir 19: 1.017   3  0 -3     dir 20: 0.250   0  0  0
        dir 21: 0.502   1  0  1     dir 22: 0.757   2  0  2     dir 23: 1.017   3  1  3
carangle 36
        dir  0: 0.250   0  0  0     dir  1: 0.500  -1  0  0     dir  2: 0.750  -2 -1  0
        dir  3: 1.000  -3 -1  0     dir  4: 0.250   0  0  0     dir  5: 0.502  -1  0  1
        dir  6: 0.757  -2 -1  2     dir  7: 1.017  -3 -1  3     dir  8: 0.250   0  0  0
        dir  9: 0.502  -1  0 -1     dir 10: 0.757  -2 -1 -2     dir 11: 1.017  -3 -1 -3
        dir 12: 0.250   0  0  0     dir 13: 0.500   1  0  0     dir 14: 0.750   2  1  0
        dir 15: 1.000   3  1  0     dir 16: 0.250   0  0  0     dir 17: 0.502   1  0 -1
        dir 18: 0.757   2  1 -2     dir 19: 1.017   3  1 -3     dir 20: 0.250   0  0  0
        dir 21: 0.502   1  0  1     dir 22: 0.757   2  1  2     dir 23: 1.017   3  1  3
carangle 37
        dir  0: 0.250   0  0  0     dir  1: 0.500  -1  0  0     dir  2: 0.750  -2 -1  0
        dir  3: 1.000  -3 -1  0     dir  4: 0.250   0  0  0     dir  5: 0.502  -1  0  1
        dir  6: 0.757  -2 -1  2     dir  7: 1.017  -3 -2  3     dir  8: 0.250   0  0  0
        dir  9: 0.502  -1  0 -1     dir 10: 0.757  -2 -1 -2     dir 11: 1.017  -3 -1 -3
        dir 12: 0.250   0  0  0     dir 13: 0.500   1  0  0     dir 14: 0.750   2  1  0
        dir 15: 1.000   3  1  0     dir 16: 0.250   0  0  0     dir 17: 0.502   1  0 -1
        dir 18: 0.757   2  1 -2     dir 19: 1.017   3  1 -3     dir 20: 0.250   0  0  0
        dir 21: 0.502   1  0  1     dir 22: 0.757   2  1  2     dir 23: 1.017   3  2  3
carangle 38
```

## TABLE I

```
    dir  0: 0.250   0  0  0      dir  1: 0.500  -1 -1  0      dir  2: 0.750  -2 -1  0
    dir  3: 1.000  -3 -2  0      dir  4: 0.250   0  0  0      dir  5: 0.502  -1 -1  1
    dir  6: 0.757  -2 -1  2      dir  7: 1.017  -3 -2  3      dir  8: 0.250   0  0  0
    dir  9: 0.502  -1 -1 -1      dir 10: 0.757  -2 -1 -2      dir 11: 1.017  -3 -2 -3
    dir 12: 0.250   0  0  0      dir 13: 0.500   1  1  0      dir 14: 0.750   2  1  0
    dir 15: 1.000   3  2  0      dir 16: 0.250   0  0  0      dir 17: 0.502   1  1 -1
    dir 18: 0.757   2  1 -2      dir 19: 1.017   3  2 -3      dir 20: 0.250   0  0  0
    dir 21: 0.502   1  1  1      dir 22: 0.757   2  1  2      dir 23: 1.017   3  2  3
carangle 39
    dir  0: 0.250   0  0  0      dir  1: 0.500  -1 -1  0      dir  2: 0.750  -2 -1  0
    dir  3: 1.000  -3 -2  0      dir  4: 0.250   0  0  0      dir  5: 0.502  -1 -1  1
    dir  6: 0.757  -2 -1  2      dir  7: 1.017  -2 -2  3      dir  8: 0.250   0  0  0
    dir  9: 0.502  -1 -1 -1      dir 10: 0.757  -2 -1 -2      dir 11: 1.017  -3 -2 -3
    dir 12: 0.250   0  0  0      dir 13: 0.500   1  1  0      dir 14: 0.750   2  1  0
    dir 15: 1.000   3  2  0      dir 16: 0.250   0  0  0      dir 17: 0.502   1  1 -1
    dir 18: 0.757   2  1 -2      dir 19: 1.017   3  2 -3      dir 20: 0.250   0  0  0
    dir 21: 0.502   1  1  1      dir 22: 0.757   2  1  2      dir 23: 1.017   2  2  3
carangle 40
    dir  0: 0.250   0  0  0      dir  1: 0.500  -1 -1  0      dir  2: 0.750  -2 -2  0
    dir  3: 1.000  -2 -2  0      dir  4: 0.250   0  0  0      dir  5: 0.502  -1 -1  1
    dir  6: 0.757  -2 -2  2      dir  7: 1.017  -2 -3  3      dir  8: 0.250   0  0  0
    dir  9: 0.502  -1 -1 -1      dir 10: 0.757  -2 -2 -2      dir 11: 1.017  -3 -2 -3
    dir 12: 0.250   0  0  0      dir 13: 0.500   1  1  0      dir 14: 0.750   2  2  0
    dir 15: 1.000   2  2  0      dir 16: 0.250   0  0  0      dir 17: 0.502   1  1 -1
    dir 18: 0.757   2  2 -2      dir 19: 1.017   3  2 -3      dir 20: 0.250   0  0  0
    dir 21: 0.502   1  1  1      dir 22: 0.757   2  2  2      dir 23: 1.017   2  3  3
carangle 41
    dir  0: 0.250   0  0  0      dir  1: 0.500  -1 -1  0      dir  2: 0.750  -1 -2  0
    dir  3: 1.000  -2 -3  0      dir  4: 0.250   0  0  0      dir  5: 0.502  -1 -1  1
    dir  6: 0.757  -1 -2  2      dir  7: 1.017  -2 -3  3      dir  8: 0.250   0  0  0
    dir  9: 0.502  -1 -1 -1      dir 10: 0.757  -1 -2 -2      dir 11: 1.017  -2 -2 -3
    dir 12: 0.250   0  0  0      dir 13: 0.500   1  1  0      dir 14: 0.750   1  2  0
    dir 15: 1.000   2  3  0      dir 16: 0.250   0  0  0      dir 17: 0.502   1  1 -1
    dir 18: 0.757   1  2 -2      dir 19: 1.017   2  2 -3      dir 20: 0.250   0  0  0
    dir 21: 0.502   1  1  1      dir 22: 0.757   1  2  2      dir 23: 1.017   2  3  3
carangle 42
    dir  0: 0.250   0  0  0      dir  1: 0.500  -1 -1  0      dir  2: 0.750  -1 -2  0
    dir  3: 1.000  -2 -3  0      dir  4: 0.250   0  0  0      dir  5: 0.502  -1 -1  1
    dir  6: 0.757  -1 -2  2      dir  7: 1.017  -2 -3  3      dir  8: 0.250   0  0  0
    dir  9: 0.502  -1 -1 -1      dir 10: 0.757  -1 -2 -2      dir 11: 1.017  -2 -3 -3
    dir 12: 0.250   0  0  0      dir 13: 0.500   1  1  0      dir 14: 0.750   1  2  0
    dir 15: 1.000   2  3  0      dir 16: 0.250   0  0  0      dir 17: 0.502   1  1 -1
    dir 18: 0.757   1  2 -2      dir 19: 1.017   2  3 -3      dir 20: 0.250   0  0  0
    dir 21: 0.502   1  1  1      dir 22: 0.757   1  2  2      dir 23: 1.017   2  3  3
carangle 43
    dir  0: 0.250   0  0  0      dir  1: 0.500   0 -1  0      dir  2: 0.750  -1 -2  0
    dir  3: 1.000  -1 -3  0      dir  4: 0.250   0  0  0      dir  5: 0.502   0 -1  1
    dir  6: 0.757  -1 -2  2      dir  7: 1.017  -1 -3  3      dir  8: 0.250   0  0  0
    dir  9: 0.502   0 -1 -1      dir 10: 0.757  -1 -2 -2      dir 11: 1.017  -2 -3 -3
    dir 12: 0.250   0  0  0      dir 13: 0.500   0  1  0      dir 14: 0.750   1  2  0
    dir 15: 1.000   1  3  0      dir 16: 0.250   0  0  0      dir 17: 0.502   0  1 -1
    dir 18: 0.757   1  2 -2      dir 19: 1.017   2  3 -3      dir 20: 0.250   0  0  0
    dir 21: 0.502   0  1  1      dir 22: 0.757   1  2  2      dir 23: 1.017   1  3  3
carangle 44
    dir  0: 0.250   0  0  0      dir  1: 0.500   0 -1  0      dir  2: 0.750  -1 -2  0
    dir  3: 1.000  -1 -3  0      dir  4: 0.250   0  0  0      dir  5: 0.502   0 -1  1
    dir  6: 0.757  -1 -2  2      dir  7: 1.017  -1 -3  3      dir  8: 0.250   0  0  0
    dir  9: 0.502   0 -1 -1      dir 10: 0.757  -1 -2 -2      dir 11: 1.017  -1 -3 -3
    dir 12: 0.250   0  0  0      dir 13: 0.500   0  1  0      dir 14: 0.750   1  2  0
    dir 15: 1.000   1  3  0      dir 16: 0.250   0  0  0      dir 17: 0.502   0  1 -1
    dir 18: 0.757   1  2 -2      dir 19: 1.017   1  3 -3      dir 20: 0.250   0  0  0
    dir 21: 0.502   0  1  1      dir 22: 0.757   1  2  2      dir 23: 1.017   1  3  3
carangle 45
    dir  0: 0.250   0  0  0      dir  1: 0.500   0 -1  0      dir  2: 0.750   0 -2  0
    dir  3: 1.000  -1 -3  0      dir  4: 0.250   0  0  0      dir  5: 0.502   0 -1  1
    dir  6: 0.757   0 -2  2      dir  7: 1.017   0 -3  3      dir  8: 0.250   0  0  0
    dir  9: 0.502   0 -1 -1      dir 10: 0.757   0 -2 -2      dir 11: 1.017  -1 -3 -3
    dir 12: 0.250   0  0  0      dir 13: 0.500   0  1  0      dir 14: 0.750   0  2  0
    dir 15: 1.000   1  3  0      dir 16: 0.250   0  0  0      dir 17: 0.502   0  1 -1
    dir 18: 0.757   0  2 -2      dir 19: 1.017   1  3 -3      dir 20: 0.250   0  0  0
    dir 21: 0.502   0  1  1      dir 22: 0.757   0  2  2      dir 23: 1.017   0  3  3
carangle 46
    dir  0: 0.250   0  0  0      dir  1: 0.500   0 -1  0      dir  2: 0.750   0 -2  0
    dir  3: 1.000   0 -3  0      dir  4: 0.250   0  0  0      dir  5: 0.502   0 -1  1
    dir  6: 0.757   0 -2  2      dir  7: 1.017   0 -3  3      dir  8: 0.250   0  0  0
    dir  9: 0.502   0 -1 -1      dir 10: 0.757   0 -2 -2      dir 11: 1.017  -1 -3 -3
    dir 12: 0.250   0  0  0      dir 13: 0.500   0  1  0      dir 14: 0.750   0  2  0
    dir 15: 1.000   0  3  0      dir 16: 0.250   0  0  0      dir 17: 0.502   0  1 -1
    dir 18: 0.757   0  2 -2      dir 19: 1.017   1  3 -3      dir 20: 0.250   0  0  0
    dir 21: 0.502   0  1  1      dir 22: 0.757   0  2  2      dir 23: 1.017   0  3  3
carangle 47
    dir  0: 0.250   0  0  0      dir  1: 0.500   0 -1  0      dir  2: 0.750   0 -2  0
    dir  3: 1.000   0 -3  0      dir  4: 0.250   0  0  0      dir  5: 0.502   0 -1  1
    dir  6: 0.757   0 -2  2      dir  7: 1.017   0 -4  3      dir  8: 0.250   0  0  0
    dir  9: 0.502   0 -1 -1      dir 10: 0.757   0 -2 -2      dir 11: 1.017   0 -3 -3
    dir 12: 0.250   0  0  0      dir 13: 0.500   0  1  0      dir 14: 0.750   0  2  0
```

## TABLE I

```
dir 15: 1.000   0  3  0    dir 16: 0.250   0  0  0    dir 17: 0.502   0  1 -1
dir 18: 0.757   0  2 -2    dir 19: 1.017   0  3 -3    dir 20: 0.250   0  0  0
dir 21: 0.502   0  1  1    dir 22: 0.757   0  2  2    dir 23: 1.017   0  4  3
carangle 48
dir  0: 0.250   0 -1  0    dir  1: 0.500   0 -2  0    dir  2: 0.750   0 -3  0
dir  3: 1.000   0 -4  0    dir  4: 0.250   0 -1  0    dir  5: 0.502   0 -2  1
dir  6: 0.757   0 -3  2    dir  7: 1.017   0 -4  3    dir  8: 0.250   0 -1  0
dir  9: 0.502   0 -2 -1    dir 10: 0.757   0 -3 -2    dir 11: 1.017   0 -4 -3
dir 12: 0.250   0  1  0    dir 13: 0.500   0  2  0    dir 14: 0.750   0  3  0
dir 15: 1.000   0  4  0    dir 16: 0.250   0  1  0    dir 17: 0.502   0  2 -1
dir 18: 0.757   0  3 -2    dir 19: 1.017   0  4 -3    dir 20: 0.250   0  1  0
dir 21: 0.502   0  2  1    dir 22: 0.757   0  3  2    dir 23: 1.017   0  4  3
carangle 49
dir  0: 0.250   0  0  0    dir  1: 0.500   0 -1  0    dir  2: 0.750   0 -2  0
dir  3: 1.000   0 -3  0    dir  4: 0.250   0  0  0    dir  5: 0.502   0 -1  1
dir  6: 0.757   0 -2  2    dir  7: 1.017   0 -3  3    dir  8: 0.250   0  0  0
dir  9: 0.502   0 -1 -1    dir 10: 0.757   0 -2 -2    dir 11: 1.017   0 -4 -3
dir 12: 0.250   0  0  0    dir 13: 0.500   0  1  0    dir 14: 0.750   0  2  0
dir 15: 1.000   0  3  0    dir 16: 0.250   0  0  0    dir 17: 0.502   0  1 -1
dir 18: 0.757   0  2 -2    dir 19: 1.017   0  4 -3    dir 20: 0.250   0  0  0
dir 21: 0.502   0  1  1    dir 22: 0.757   0  2  2    dir 23: 1.017   0  3  3
carangle 50
dir  0: 0.250   0  0  0    dir  1: 0.500   0 -1  0    dir  2: 0.750   0 -2  0
dir  3: 1.000   0 -3  0    dir  4: 0.250   0  0  0    dir  5: 0.502   0 -1  1
dir  6: 0.757   0 -2  2    dir  7: 1.017   1 -3  3    dir  8: 0.250   0  0  0
dir  9: 0.502   0 -1 -1    dir 10: 0.757   0 -2 -2    dir 11: 1.017   0 -3 -3
dir 12: 0.250   0  0  0    dir 13: 0.500   0  1  0    dir 14: 0.750   0  2  0
dir 15: 1.000   0  3  0    dir 16: 0.250   0  0  0    dir 17: 0.502   0  1 -1
dir 18: 0.757   0  2 -2    dir 19: 1.017   0  3 -3    dir 20: 0.250   0  0  0
dir 21: 0.502   0  1  1    dir 22: 0.757   0  2  2    dir 23: 1.017  -1  3  3
carangle 51
dir  0: 0.250   0  0  0    dir  1: 0.500   0 -1  0    dir  2: 0.750   0 -2  0
dir  3: 1.000   1 -3  0    dir  4: 0.250   0  0  0    dir  5: 0.502   0 -1  1
dir  6: 0.757   0 -2  2    dir  7: 1.017   1 -3  3    dir  8: 0.250   0  0  0
dir  9: 0.502   0 -1 -1    dir 10: 0.757   0 -2 -2    dir 11: 1.017   0 -3 -3
dir 12: 0.250   0  0  0    dir 13: 0.500   0  1  0    dir 14: 0.750   0  2  0
dir 15: 1.000  -1  3  0    dir 16: 0.250   0  0  0    dir 17: 0.502   0  1 -1
dir 18: 0.757   0  2 -2    dir 19: 1.017   0  3 -3    dir 20: 0.250   0  0  0
dir 21: 0.502   0  1  1    dir 22: 0.757   0  2  2    dir 23: 1.017  -1  3  3
carangle 52
dir  0: 0.250   0  0  0    dir  1: 0.500   0 -1  0    dir  2: 0.750   1 -2  0
dir  3: 1.000   1 -3  0    dir  4: 0.250   0  0  0    dir  5: 0.502   0 -1  1
dir  6: 0.757   1 -2  2    dir  7: 1.017   1 -3  3    dir  8: 0.250   0  0  0
dir  9: 0.502   0 -1 -1    dir 10: 0.757   1 -2 -2    dir 11: 1.017   1 -3 -3
dir 12: 0.250   0  0  0    dir 13: 0.500   0  1  0    dir 14: 0.750  -1  2  0
dir 15: 1.000  -1  3  0    dir 16: 0.250   0  0  0    dir 17: 0.502   0  1 -1
dir 18: 0.757  -1  2 -2    dir 19: 1.017  -1  3 -3    dir 20: 0.250   0  0  0
dir 21: 0.502   0  1  1    dir 22: 0.757  -1  2  2    dir 23: 1.017  -1  3  3
carangle 53
dir  0: 0.250   0  0  0    dir  1: 0.500   0 -1  0    dir  2: 0.750   1 -2  0
dir  3: 1.000   1 -3  0    dir  4: 0.250   0  0  0    dir  5: 0.502   0 -1  1
dir  6: 0.757   1 -2  2    dir  7: 1.017   2 -3  3    dir  8: 0.250   0  0  0
dir  9: 0.502   0 -1 -1    dir 10: 0.757   1 -2 -2    dir 11: 1.017   1 -3 -3
dir 12: 0.250   0  0  0    dir 13: 0.500   0  1  0    dir 14: 0.750  -1  2  0
dir 15: 1.000  -1  3  0    dir 16: 0.250   0  0  0    dir 17: 0.502   0  1 -1
dir 18: 0.757  -1  2 -2    dir 19: 1.017  -1  3 -3    dir 20: 0.250   0  0  0
dir 21: 0.502   0  1  1    dir 22: 0.757  -1  2  2    dir 23: 1.017  -2  3  3
carangle 54
dir  0: 0.250   0  0  0    dir  1: 0.500   1 -1  0    dir  2: 0.750   1 -2  0
dir  3: 1.000   2 -3  0    dir  4: 0.250   0  0  0    dir  5: 0.502   1 -1  1
dir  6: 0.757   1 -2  2    dir  7: 1.017   2 -3  3    dir  8: 0.250   0  0  0
dir  9: 0.502   1 -1 -1    dir 10: 0.757   1 -2 -2    dir 11: 1.017   2 -3 -3
dir 12: 0.250   0  0  0    dir 13: 0.500  -1  1  0    dir 14: 0.750  -1  2  0
dir 15: 1.000  -2  3  0    dir 16: 0.250   0  0  0    dir 17: 0.502  -1  1 -1
dir 18: 0.757  -1  2 -2    dir 19: 1.017  -2  3 -3    dir 20: 0.250   0  0  0
dir 21: 0.502  -1  1  1    dir 22: 0.757  -1  2  2    dir 23: 1.017  -2  3  3
carangle 55
dir  0: 0.250   0  0  0    dir  1: 0.500   1 -1  0    dir  2: 0.750   1 -2  0
dir  3: 1.000   2 -3  0    dir  4: 0.250   0  0  0    dir  5: 0.502   1 -1  1
dir  6: 0.757   1 -2  2    dir  7: 1.017   2 -2  3    dir  8: 0.250   0  0  0
dir  9: 0.502   1 -1 -1    dir 10: 0.757   1 -2 -2    dir 11: 1.017   2 -3 -3
dir 12: 0.250   0  0  0    dir 13: 0.500  -1  1  0    dir 14: 0.750  -1  2  0
dir 15: 1.000  -2  3  0    dir 16: 0.250   0  0  0    dir 17: 0.502  -1  1 -1
dir 18: 0.757  -1  2 -2    dir 19: 1.017  -2  3 -3    dir 20: 0.250   0  0  0
dir 21: 0.502  -1  1  1    dir 22: 0.757  -1  2  2    dir 23: 1.017  -2  2  3
carangle 56
dir  0: 0.250   0  0  0    dir  1: 0.500   1 -1  0    dir  2: 0.750   2 -2  0
dir  3: 1.000   2 -2  0    dir  4: 0.250   0  0  0    dir  5: 0.502   1 -1  1
dir  6: 0.757   2 -2  2    dir  7: 1.017   2 -2  3    dir  8: 0.250   0  0  0
dir  9: 0.502   1 -1 -1    dir 10: 0.757   2 -2 -2    dir 11: 1.017   2 -3 -3
dir 12: 0.250   0  0  0    dir 13: 0.500  -1  1  0    dir 14: 0.750  -2  2  0
dir 15: 1.000  -2  2  0    dir 16: 0.250   0  0  0    dir 17: 0.502  -1  1 -1
dir 18: 0.757  -2  2 -2    dir 19: 1.017  -2  3 -3    dir 20: 0.250   0  0  0
dir 21: 0.502  -1  1  1    dir 22: 0.757  -2  2  2    dir 23: 1.017  -3  2  3
carangle 57
dir  0: 0.250   0  0  0    dir  1: 0.500   1 -1  0    dir  2: 0.750   2 -1  0
```

## TABLE I

```
dir  3: 1.000   3 -2  0      dir  4: 0.250   0  0  0      dir  5: 0.502   1 -1  1
dir  6: 0.757   2 -1  2      dir  7: 1.017   3 -2  3      dir  8: 0.250   0  0  0
dir  9: 0.502   1 -1 -1      dir 10: 0.757   2 -1 -2      dir 11: 1.017   2 -2 -3
dir 12: 0.250   0  0  0      dir 13: 0.500  -1  1  0      dir 14: 0.750  -2  1  0
dir 15: 1.000  -3  2  0      dir 16: 0.250   0  0  0      dir 17: 0.502  -1  1 -1
dir 18: 0.757  -2  1 -2      dir 19: 1.017  -2  2 -3      dir 20: 0.250   0  0  0
dir 21: 0.502  -1  1  1      dir 22: 0.757  -2  1  2      dir 23: 1.017  -3  2  3
carangle 58
dir  0: 0.250   0  0  0      dir  1: 0.500   1 -1  0      dir  2: 0.750   2 -1  0
dir  3: 1.000   3 -2  0      dir  4: 0.250   0  0  0      dir  5: 0.502   1 -1  1
dir  6: 0.757   2 -1  2      dir  7: 1.017   3 -2  3      dir  8: 0.250   0  0  0
dir  9: 0.502   1 -1 -1      dir 10: 0.757   2 -1 -2      dir 11: 1.017   3 -2 -3
dir 12: 0.250   0  0  0      dir 13: 0.500  -1  1  0      dir 14: 0.750  -2  1  0
dir 15: 1.000  -3  2  0      dir 16: 0.250   0  0  0      dir 17: 0.502  -1  1 -1
dir 18: 0.757  -2  1 -2      dir 19: 1.017  -3  2 -3      dir 20: 0.250   0  0  0
dir 21: 0.502  -1  1  1      dir 22: 0.757  -2  1  2      dir 23: 1.017  -3  2  3
carangle 59
dir  0: 0.250   0  0  0      dir  1: 0.500   1  0  0      dir  2: 0.750   2 -1  0
dir  3: 1.000   3 -1  0      dir  4: 0.250   0  0  0      dir  5: 0.502   1  0  1
dir  6: 0.757   2 -1  2      dir  7: 1.017   3 -1  3      dir  8: 0.250   0  0  0
dir  9: 0.502   1  0 -1      dir 10: 0.757   2 -1 -2      dir 11: 1.017   3 -2 -3
dir 12: 0.250   0  0  0      dir 13: 0.500  -1  0  0      dir 14: 0.750  -2  1  0
dir 15: 1.000  -3  1  0      dir 16: 0.250   0  0  0      dir 17: 0.502  -1  0 -1
dir 18: 0.757  -2  1 -2      dir 19: 1.017  -3  2 -3      dir 20: 0.250   0  0  0
dir 21: 0.502  -1  0  1      dir 22: 0.757  -2  1  2      dir 23: 1.017  -3  1  3
carangle 60
dir  0: 0.250   0  0  0      dir  1: 0.500   1  0  0      dir  2: 0.750   2 -1  0
dir  3: 1.000   3 -1  0      dir  4: 0.250   0  0  0      dir  5: 0.502   1  0  1
dir  6: 0.757   2 -1  2      dir  7: 1.017   3 -1  3      dir  8: 0.250   0  0  0
dir  9: 0.502   1  0 -1      dir 10: 0.757   2 -1 -2      dir 11: 1.017   3 -1 -3
dir 12: 0.250   0  0  0      dir 13: 0.500  -1  0  0      dir 14: 0.750  -2  1  0
dir 15: 1.000  -3  1  0      dir 16: 0.250   0  0  0      dir 17: 0.502  -1  0 -1
dir 18: 0.757  -2  1 -2      dir 19: 1.017  -3  1 -3      dir 20: 0.250   0  0  0
dir 21: 0.502  -1  0  1      dir 22: 0.757  -2  1  2      dir 23: 1.017  -3  1  3
carangle 61
dir  0: 0.250   0  0  0      dir  1: 0.500   1  0  0      dir  2: 0.750   2  0  0
dir  3: 1.000   3 -1  0      dir  4: 0.250   0  0  0      dir  5: 0.502   1  0  1
dir  6: 0.757   2  0  2      dir  7: 1.017   3  0  3      dir  8: 0.250   0  0  0
dir  9: 0.502   1  0 -1      dir 10: 0.757   2  0 -2      dir 11: 1.017   3 -1 -3
dir 12: 0.250   0  0  0      dir 13: 0.500  -1  0  0      dir 14: 0.750  -2  0  0
dir 15: 1.000  -3  1  0      dir 16: 0.250   0  0  0      dir 17: 0.502  -1  0 -1
dir 18: 0.757  -2  0 -2      dir 19: 1.017  -3  1 -3      dir 20: 0.250   0  0  0
dir 21: 0.502  -1  0  1      dir 22: 0.757  -2  0  2      dir 23: 1.017  -3  0  3
carangle 62
dir  0: 0.250   0  0  0      dir  1: 0.500   1  0  0      dir  2: 0.750   2  0  0
dir  3: 1.000   3  0  0      dir  4: 0.250   0  0  0      dir  5: 0.502   1  0  1
dir  6: 0.757   2  0  2      dir  7: 1.017   3  0  3      dir  8: 0.250   0  0  0
dir  9: 0.502   1  0 -1      dir 10: 0.757   2  0 -2      dir 11: 1.017   3 -1 -3
dir 12: 0.250   0  0  0      dir 13: 0.500  -1  0  0      dir 14: 0.750  -2  0  0
dir 15: 1.000  -3  0  0      dir 16: 0.250   0  0  0      dir 17: 0.502  -1  0 -1
dir 18: 0.757  -2  0 -2      dir 19: 1.017  -3  1 -3      dir 20: 0.250   0  0  0
dir 21: 0.502  -1  0  1      dir 22: 0.757  -2  0  2      dir 23: 1.017  -3  0  3
carangle 63
dir  0: 0.250   0  0  0      dir  1: 0.500   1  0  0      dir  2: 0.750   2  0  0
dir  3: 1.000   3  0  0      dir  4: 0.250   0  0  0      dir  5: 0.502   1  0  1
dir  6: 0.757   2  0  2      dir  7: 1.017   4  0  3      dir  8: 0.250   0  0  0
dir  9: 0.502   1  0 -1      dir 10: 0.757   2  0 -2      dir 11: 1.017   3  0 -3
dir 12: 0.250   0  0  0      dir 13: 0.500  -1  0  0      dir 14: 0.750  -2  0  0
dir 15: 1.000  -3  0  0      dir 16: 0.250   0  0  0      dir 17: 0.502  -1  0 -1
dir 18: 0.757  -2  0 -2      dir 19: 1.017  -3  0 -3      dir 20: 0.250   0  0  0
dir 21: 0.502  -1  0  1      dir 22: 0.757  -2  0  2      dir 23: 1.017  -4  0  3
```

## Claims

1. Apparatus for planning a path for a vehicle (1501, 1502, 1504) to follow through a given task space from a start point to a goal point, the path satisfying a given cost criterion, the vehicle being movable on at least one wheel and a rotatable or gliding support, said wheel being positioned substantially at one end of the vehicle and being steerable, said support being positioned substantially at the other end of the vehicle, characterized in that the apparatus comprises means for storing an internal representation of a close environment of the vehicle, means for representing a pose of the vehicle in the given task space, which pose is measured in respect of a fixed point of the vehicle, and means for calculating a maneuver trajectory

EP 0 375 055 B1

based on the internal representation.

2. Apparatus according to Claim 1, characterized in that the fixed point is positioned at a point of symmetry with respect to the support.

3. Apparatus according to Claim 1 or 2, characterized in that the storing means comprises a memory for storing a representation of a discretized configuration space corresponding to a discretized subset of all positions of the vehicle in the given task space, wherein the representation at the configuration space includes an array of states, each state having cost to goal and direction arrow fields, wherein the array includes a first and a second dimension for representing the pose of the vehicle in the given task space along a first and along a second Cartesian axis, respectively; and a third dimension for representing the pose of the vehicle according to an angular orientation of the vehicle, and in that the calculating means comprises means for propagating cost waves in the configuration space, and means for determining a path from a start state to a goal state in the configuration space based on the cost waves.

4. Apparatus according to Claim 3, characterized in that the propagating means includes computing means for repeatedly
   a) exploring all neighbour states of a state in the configuration space;
   b) improving neighbour states of the state by assigning appropriate values of cost to goal and direction arrows to the state;
   c) adding improved neighbour states to a storage data structure; the steps a), b), c) hereinafter being referred to as budding a state.

5. Apparatus according to Claim 4, characterized in that budding a state includes searching states according to a precedence in which if a first neighbour state is blocked by an obstacle, no second neighbour state beyond the first neighbour state is searched.

6. Apparatus according to Claim 5, characterized in that a representation of neighbour states is stored in a neighbour memory in a tree structure according to said precedence, wherein subtrees of neighbour states which are blocked are neglected during the search.

7. Apparatus according to Claim 3, characterized in that the determining means includes computing means for following values in the direction arrow fields.

8. Apparatus according to any one of Claims 3, 4, 5, 6 and 7, characterized in that the vehicle is a car, the pose of which is measured along the first and second Cartesian axes according to a position of the rear differential of the car.

9. Apparatus according to any one of Claims 3, 4, 5, 6, 7 and 8, characterized in that each state in the representation of the configuration space has a set of neighbour states which fall within a bow-tie shape in task space.

10. Apparatus according to any one of the previous Claims, characterized in that the vehicle is a car and the maneuver trajectory is a path for parallel parking between two parked cars.

11. Apparatus according to Claim 10, characterized in that the path is a path for making a three point turn.

12. An apparatus as claimed in any of Claims 1 to 11 and configured as a vehicle.

13. A method for planning a path for an object (1501, 1502, 1504) to follow through a given task space from a start point to a goal point, the path satisfying a given cost criterion, the object being movable on at least one wheel and a rotatable or gliding support, said wheel being positioned substantially at one end of the vehicle and being steerable, said support being positioned substantially at the other end of the vehicle, said method comprising the step of propagating cost waves in a configuration space representation of the task space, characterized in that said propagating step comprises the step of budding in a neighbourhood of at least one state in the configuration space using a precedence in which if a first neighbour state is blocked by an obstacle (1503), no second neighbour state beyond the first neighbour state is searched.

14. A method as claimed in Claim 13, characterized in that said propagating step comprises the step of budding in space variant neighbourhoods of at least two states.

22

**15.** Method according to Claim 14 characterized in that a shape of the neighbourhoods varies by state of configuration space.

**16.** Method according to Claim 14, characterized in that neighbours correspond to respective numbers of transitions along respective parameter axes of configuration space and the respective numbers vary by state of the configuration space.


**Patentansprüche**

**1.** Vorrichtung zum Planen einer Strecke, der ein Fahrzeug (1501, 1502, 1504) durch einen gegebenen Aktionsraum von einem Ausgangspunkt zu einem Zielpunkt folgen soll, wobei die Strecke ein gegebenes Kostenkriterium erfüllt, das Fahrzeug auf mindestens einem Rad und einem drehbaren oder gleitenden Träger bewegbar ist, das genannte Rad nahezu an einem Ende des Fahrzeugs positioniert ist und steuerbar ist und der genannte Träger nahezu am anderen Ende des Fahrzeugs positioniert ist, dadurch gekennzeichnet, daß die Vorrichtung Mittel zum Speichern einer internen Repräsentation einer nahen Umgebung des Fahrzeugs umfaßt, Mittel zur Repräsentation einer Lage des Fahrzeugs in dem gegebenen Aktionsraum, wobei die Lage in bezug auf einen festen Punkt des Fahrzeugs gemessen wird, und Mittel zum Berechnen einer auf der internen Repräsentation beruhenden Manövriertrajektorie.

**2.** Vorrichtung nach Anspruch 1, dadurch gekennzeichnet, daß der feste Punkt bezüglich des Trägers bei einem Symmetriepunkt positioniert ist.

**3.** Vorrichtung nach Anspruch 1 oder 2, dadurch gekennzeichnet, daß die Speichermittel einen Speicher zum Speichern einer Repräsentation eines einem diskretisierten Teilsatz aller Positionen des Fahrzeugs in dem gegebenen Aktionsraum entsprechenden diskretisierten Konfigurationsraums umfassen, wobei die Repräsentation beim Konfigurationsraum ein Feld von Zuständen einschließt und hierbei jeder Zustand Kosten-bis-zum-Ziel- und Richtungspfeil-Felder hat, wobei das Feld eine erste und eine zweite Dimension zum Darstellen der Lage des Fahrzeuges in dem gegebenen Aktionsraum entlang einer ersten bzw. entlang einer zweiten kartesischen Achse hat und eine dritte Dimension zum Darstellen der Lage des Fahrzeuges entsprechend einer Winkelorientierung des Fahrzeuges, und daß die Berechnungsmittel Mittel zum Ausbreiten von Kostenwellen im Konfigurationsraum umfassen und Mittel zum Bestimmen einer Strecke von einem Ausgangszustand zu einem Zielzustand im Konfigurationsraum auf der Basis der Kostenwellen.

**4.** Vorrichtung nach Anspruch 3, dadurch gekennzeichnet, daß die Ausbreitungsmittel Rechenmittel umfassen, um wiederholt:
a) alle Nachbarzustände eines Zustandes im Konfigurationsraum zu untersuchen;
b) Nachbarzustände des Zustandes zu verbessern durch Zuweisung geeigneter Kosten-bis-zum-Ziel- und Richtungspfeil-Werte an den Zustand;
c) verbesserte Nachbarzustände zu einer Speicherdatenstruktur zu addieren; wobei die Schritte a), b), c) im folgenden als "Budding" eines Zustandes bezeichnet werden..

**5.** Vorrichtung nach Anspruch 4, dadurch gekennzeichnet, daß "Budding" eines Zustandes das Aufsuchen von Zuständen entsprechend einem Vorrang beinhaltet, bei dem, wenn ein erster Nachbarzustand von einem Hindernis blockiert wird, kein zweiter Nachbarzustand jenseits des ersten Nachbarzustandes aufgesucht wird.

**6.** Vorrichtung nach Anspruch 5, dadurch gekennzeichnet, daß eine Repräsentation von Nachbarzuständen in einem Nachbarspeicher in einer Baumstruktur entsprechend dem genannten Vorrang gespeichert wird, wobei Subbäume von Nachbarzuständen, die blockiert sind, während der Suche nicht berücksichtigt werden.

**7.** Vorrichtung nach Anspruch 3, dadurch gekennzeichnet, daß die Bestimmungsmittel Rechenmittel beinhalten, um Werten in den Richtungspfeil-Feldern zu folgen.

**8.** Vorrichtung nach einem der Ansprüche 3, 4, 5, 6 und 7, dadurch gekennzeichnet, daß das Fahrzeug ein Auto ist, dessen Lage entlang der ersten und zweiten kartesischen Achsen entsprechend einer Position des Heckdifferentials des Autos gemessen wird.

9. Vorrichtung nach einem der Ansprüche 3, 4, 5, 6, 7 und 8, <u>dadurch gekennzeichnet</u>, daß jeder Zustand in der Repräsentation des Konfigurationsraums einen Satz von Nachbarzuständen hat, der innerhalb einer einem Doppelkegel entsprechenden Form im Aktionsraum liegt.

10. Vorrichtung nach einem der vorhergehenden Ansprüche, <u>dadurch gekennzeichnet</u>, daß das Fahrzeug ein Auto ist und die Manövriertrajektorie ein Weg zum parallel Einparken zwischen zwei geparkten Autos ist.

11. Vorrichtung nach Anspruch 10, <u>dadurch gekennzeichnet</u>, daß der Weg ein Weg zum Wenden in drei Zügen ist.

12. Vorrichtung nach einem der Ansprüche 1 bis 11 und ausgeführt als Fahrzeug.

13. Verfahren zum Planen einer Strecke, der ein Gegenstand (1501, 1502, 1504) durch einen gegebenen Aktionsraum von einem Ausgangspunkt zu einem Zielpunkt folgen soll, wobei die Strecke ein gegebenes Kostenkriterium erfüllt, der Gegenstand auf mindestens einem Rad und einem drehbaren oder gleitenden Träger bewegbar ist, das genannte Rad nahezu an einem Ende des Fahrzeugs positioniert ist und steuerbar ist und der genannte Träger nahezu am anderen Ende des Fahrzeugs positioniert ist, wobei das Verfahren den Schritt des Ausbreitens von Kostenwellen in einer Konfigurationsraumrepräsentation des Aktionsraums umfaßt, <u>dadurch gekennzeichnet</u>, daß der Ausbreitungsschritt den Schritt des Budding in einer Nachbarschaft mindestens eines Zustandes im Konfigurationsraum umfaßt, wobei ein Vorrang verwendet wird, bei dem, wenn ein erster Nachbarzustand von einem Hindernis (1503) blockiert wird, kein zweiter Nachbarzustand jenseits des ersten Nachbarzustandes aufgesucht wird.

14. Verfahren nach Anspruch 13, <u>dadurch gekennzeichnet</u>, daß der Ausbreitungsschritt den Schritt des Budding in raumvarianten Nachbarschaften mindestens zweier Zustände umfaßt.

15. Verfahren nach Anspruch 14, <u>dadurch gekennzeichnet</u>, daß eine Form der Nachbarschaften sich mit dem Zustand des Konfigurationsraums ändert.

16. Verfahren nach Anspruch 14, <u>dadurch gekennzeichnet</u>, daß Nachbarn jeweiligen Zahlen von Übergängen entlang jeweiligen Parameterachsen des Konfigurationsraums entsprechen und die jeweiligen Zahlen sich mit dem Zustand des Konfigurationsraums ändern.

## Revendications

1. Appareil pour planifier la route que doit suivre un véhicule (1501, 1502, 1504) à travers un espace de tâche donné depuis un point de départ jusqu'à un point de destination, la route répondant à un critère de coût donné, le véhicule pouvant se déplacer sur au moins une roue et un support rotatif ou glissant, ladite roue étant disposée sensiblement à une extrémité du véhicule et étant orientable, ledit support étant positionné sensiblement à l'autre extrémité du véhicule, caractérisé en ce que l'appareil comprend des moyens pour stocker une représentation interne d'un environnement proche du véhicule, des moyens pour présenter une position du véhicule dans l'espace de tâche donné, ladite position étant mesurée par rapport à un point de repère du véhicule, et des moyens pour calculer une trajectoire de manoeuvre basée sur la représentation interne.

2. Appareil selon la revendication 1, caractérisé en ce que le point de repère est disposé en un point de symétrie par rapport au support.

3. Appareil selon la revendication 1 ou 2, caractérisé en ce que les moyens de stockage comprennent une mémoire pour stocker une représentation d'un espace de configuration discrétisé correspondant à un sous-ensemble discrétisé de toutes les positions du véhicule dans l'espace de tâche donné, la représentation dans l'espace de configuration comprenant une série d'états, chaque état ayant des champs de coût jusqu'à destination et des flèches directionnelles, et la série comprenant une première et une deuxième dimensions pour représenter la position du véhicule dans l'espace de tâche donné le long d'un premier et le long d'un deuxième axes cartésiens, respectivement, et une troisième dimension pour représenter la position du véhicule selon une orientation angulaire du véhicule, et en ce que les moyens de calcul comprennent des moyens pour propager des ondes de coût dans l'espace de configuration et des moyens pour déterminer une route depuis un état de départ jusqu'à un état de destination dans l'espace de configuration sur la base des ondes de coût.

4. Appareil selon la revendication 3, caractérisé en ce que les moyens de propagation comprennent des moyens de calcul pour, de manière répétée :

a) explorer tous les états voisins d'un état dans l'espace de configuration;

b) améliorer les états voisins de l'état en affectant des valeurs appropriées de coût jusqu'à destination et de flèches directionnelles à l'état, et

c) ajouter des états voisins améliorés à une structure de données de stockage, les étapes a), b), c) étant dénommées ci-après greffage d'un état.

5. Appareil selon la revendication 4, caractérisé en ce que le greffage d'un état comprend l'exploration d'états selon une priorité dans laquelle, si un premier état voisin est bloqué par un obstacle, aucun deuxième état voisin au-delà du premier état voisin n'est exploré.

6. Appareil selon la revendication 5, caractérisé en ce qu'une représentation d'états voisins est stockée dans une mémoire de voisins dans une structure arborescente selon ladite priorité, dans lequel des sous-arbres d'états voisins qui sont bloqués sont négligés au cours de l'exploration.

7. Appareil selon la revendication 3, caractérisé en ce que les moyens de détermination comprennent des moyens de calcul pour suivre des valeurs dans les champs de flèches directionnelles.

8. Appareil selon l'une quelconque des revendications 3, 4, 5, 6 et 7, caractérisé en ce que le véhicule est une voiture, dont la position est mesurée le long du premier et du deuxième axes cartésiens selon la position du différentiel arrière de la voiture.

9. Appareil selon l'une quelconque des revendications 3, 4, 5, 6, 7 et 8, caractérisé en ce que chaque état de la représentation de l'espace de configuration a un ensemble d'états voisins qui tombent à l'intérieur d'une forme de liaison arquée dans l'espace de tâches.

10. Appareil selon l'une quelconque des revendications précédentes, caractérisé en ce que le véhicule est une voiture et la trajectoire de manoeuvre est une route pour parquer la voiture en parallèle entre deux voitures parquées.

11. Appareil selon la revendication 10, caractérisé en ce que la route est un chemin pour effectuer une rotation autour de trois points.

12. Appareil selon l'une quelconque des revendications 1 à 11, configuré sous la forme d'un véhicule.

13. Procédé de planification d'une route qu'un objet (1501, 1502, 1504) doit suivre à travers un espace de tâche donné depuis un point de départ jusqu'à un point de destination, la route répondant à un critère de coût donné, l'objet pouvant se déplacer sur au moins une roue et un support rotatif ou glissant, ladite roue étant disposée sensiblement à une extrémité du véhicule et étant orientable, ledit support étant disposé sensiblement à l'autre extrémité du véhicule, le procédé consistant à propager des ondes de coût dans un espace de configuration représentatif de l'espace de tâche, caractérisé en ce que ledit stade de propagation comprend le greffage dans le voisinage d'au moins un état de l'espace de configuration en utilisant une priorité dans laquelle, si un premier état voisin est bloqué par un obstacle (1503), aucun deuxième état voisin au-delà du premier état voisin n'est exploré.

14. Procédé selon la revendication 13, caractérisé en ce que ladite étape de propagation comprend l'étape de greffage dans des voisinages variables dans l'espace d'au moins deux états.

15. Procédé selon la revendication 14, caractérisé en ce qu'une forme des voisinages varie par état de l'espace de configuration.

16. Procédé selon la revendication 14, caractérisé en ce que les voisins correspondent à des nombres de transition respectifs le long d'axes paramétriques respectifs de l'espace de configuration et les nombres respectifs varient par état de l'espace de configuration.

FIG.1a

FIG.1b

FIG.2

EP 0 375 055 B1

FIG.3

FIG.4

FIG.5

FIG.6

FIG.7

FIG.8

FIG.9

FIG.10

FIG.11

FIG.12

FIG.13

1404a

1402a

1403a

1404a

1405a

1403a

180°

1401a

1402a

# FIG.14a

FIG.14b

FIG. 14 c

FIG. 14d

FIG.15

FIG.16